# EUROPEAN PATENT APPLICATION

(11) **EP 0 814 438 A2**
(43) Date of publication of application: **29.12.1997**
(21) Application number: 97116645.9
(22) Date of filing: 07.09.1995
(51) Int. Cl.: G07D 7/00

(54) **Method and apparatus for discriminating, authenticating and/or counting documents**

(30) Priority: 04.10.1994 US 317349; 14.11.1994 US 340031; 08.03.1995 WO PCT/US95/02992; 23.06.1995 US 494091; 21.07.1995 US 505773; 31.08.1995 US 522173
(62) Divisional of application: 95931767.8
(71) Applicant: CUMMINS-ALLISON CORPORATION, Mount Prospect Illinois 60056 (US)
(72) Inventor: Graves, Bradford T., Arlington Heights, IL 60005 (US); Jones, William J., Kennilworth, IL 60043 (US); Munro, Mark C., Park Ridge, IL 60068 (US); Jones, John E., Winnetka, IL 60043 (US); Csulits, Frank M., Gurnee, IL 60031 (US); Mennie, Douglas U., Barrington, IL 60010 (US)
(74) Representative: Grünecker, Kinkeldey, Stockmair & Schwanhäusser Anwaltssozietät

(57) **Abstract**

A device for authenticating documents comprises an ultraviolet light source for illuminating the document, an ultraviolet light detector responsive to ultraviolet light reflected by the document, means for selecting one of a plurality of sensitivity settings each having a reference signal associated therewith, and a signal processor receiving said ultraviolet light detector output signal and determining the authenticity of the document based upon the output signal, said signal processor determining the authenticity of the document by comparing the output signal to the reference signal associated with said one of said plurality of sensitivity settings selected by the selecting means.

## Description

### Field of the Invention

The present invention relates, in general, to document identification. More specifically, the present invention relates to an apparatus and method for discriminating among a plurality of document types such as currency bills of different denominations, authenticating the genuineness of the same, and/or sorting the same. According to one embodiment the present invention also relates to a mechanism and method for detecting and clearing a jam from a machine which discriminates and counts currency bills.

### Background of the Invention

In some currency discriminators bills are transported, one at a time, passed a discriminating unit. As the bills pass the discriminating unit, the denomination of each bill is determined and a running total of each particular currency denomination and/or of the total value of the bills that are processed is maintained. A number of discriminating techniques may be employed by the discriminating unit including optical or magnetic scanning of bills. A plurality of output bins are provided and the discriminator includes means for sorting bills into the plurality of bins. For example, a discriminator may be designed to reconize a number of different denominations of U.S. bills and comprise an equal number of output bins, one associated with each denomination. These discriminators also include a reject bin for receiving all bills which cannot be identified by the discriminating unit. These bills may later be examined by an operator and then either re-fed through the discriminator or set aside as unacceptable.

Depending on the design of a discriminator, bills may be transported and scanned either along their long dimension or their narrow dimension. For a discriminator that transport bills in their narrow dimension, it is possible that a given bill may be oriented either face up or face down and either top edge first ("forward" direction) or top edge last ("reverse" direction). For discriminators that transport bills in their long dimension, it is possible that a given bill may be oriented either face up or face down and either left edge first ("forward" direction) or left edge last ("reverse" direction). The manner in which a bill must be oriented as it passes a discriminating unit depends on the characteristics of the discriminator. Some discriminators are capable of identifying the denomination of a bill only if it is fed with a precise orientation, e.g., face up and top edge first. Other discriminators are capable of identifying bills provided they are "faced" (i.e., fed with a predetermined face orientation, that is all face up or all face down). For example, such a discriminator may be able to identify a bill fed face up regardless of whether the top edge is fed first or last. Other discriminators are capable of identifying the denomination fed with any orientation. However, whether a given discriminator can discriminate between bills fed with different orientations depends on the discriminating method used. For example, a discriminator that discriminates bills based on patterns of transmitted light may be able to identify the denomination of a forward fed bill regardless of whether the bill is fed face up or face down, but the same discriminator would not be able to discriminate between a bill fed face up and a bill fed face down.

There remains a need for a discriminator that can detect and flag the presence of a bill oriented with an incorrect forward/reverse orientation and a discriminator that can sort between forward-oriented bills and reverse-oriented bills.

Furthermore, for a number of reasons, a discriminating unit may be unable to determine the denomination of a bill. These reasons include a bill being excessively soiled, worn, or faded, a bill being torn or folded, a bill being oriented in a manner that the discriminating unit cannot handle, and the discriminating unit having poor discriminating performance. Furthermore, the discriminating unit and/or a separate authenticating unit may determine that a bill is not genuine. In current discriminators, such unidentified or non-genuine bills are deposited in a reject receptacle.

A characteristic of the above described discriminators is that the value of any rejected unidentified bills is not added to the running total of the aggregate value of the stack of bills nor do the counters keeping track of the number of each currency denomination reflect the rejected unidentified bills. While this is desirable with respect to bills which are positively identified as being fake, it may be undesirable with respect to bills which were not identified for other reasons even though they are genuine bills. While the bills in a reject receptacle may be re-fed through the discriminator, the operator must then add the totals from the first batch and the second batch together. Such a procedure can be inefficient in some situations. Also, if a bill was rejected the first time because it was, for example, excessively soiled or too worn, then it is likely that the bill will remain unidentified by the discriminating unit even if re-fed.

A problem with the above described situations where the totals and/or counts do not reflect all the genuine bills in a stack is that an operator must then count all the unidentified genuine bills by hand and add such bills to separately generated totals. As a result the chance for human error increases and operating efficiency decreases. Take for example a bank setting where a customer hands a teller a stack of currency to be deposited. The teller places the stack of bills in a discriminator, the display on the discriminator indicates that a total of $730 has been identified. However, fourteen genuine bills remain unidentified. As a result, the teller must count these fourteen bills by hand or re-fed through the discriminator and then add their total to the $730 total. An error could result from the teller miscounting the unidentified bills, the teller forgetting to add the two totals together, or the teller overlooking the unidentified bills entirely `and only recording a deposit of $730. Moreover, even if the teller makes no mistakes, the efficiency of the teller is reduced by having to manually calculate additional totals. The decrease in efficiency is further aggravated where detailed records must be maintained about the specific number of each denomination processed during each transaction.

Therefore, there is a need for a currency discriminator which is capable of conveniently and efficiently accommodating genuine bills that, for whatever reason, remain unidentified after passing through the discriminating unit of a discriminator

There is also a need for a currency discriminator that makes it easy for an operator to reconcile the value of any flagged bills so that their value will be reflected in appropriate counters keeping track of processed bills. Additionally, there is a need for a discriminator that will prompt the operator as to the denominations of any flagged bills.

Additionally, in processing stacks of documents such as currency bills, it is often desirable to sort out specific types of documents such as currency bills having a specific denomination.

For a currency scanning and discriminating machine to operate, currency bills are conveyed by a transport mechanism along a transport path from an input receptacle, past a sensing device, and to an output receptacle. In normal operation, a controller monitors the signals received from the sensing device and determines the denomination of each currency bill that is scanned. However, a bill or bills can become jammed in the transport path, especially near the sensing device. Any jamming results in the machine being nonoperational. Thus, it is desirable to detect and clear the jammed currency bills in a simplistic and timely manner.

### Summary Of The Invention

It is an object of the present invention to provide an improved method and apparatus for identifying, authenticating, and/or counting currency bills comprising a plurality of currency denominations.

It is an object of the present invention to provide an improved currency scanning and counting machine which is relatively simple and compact, while at the same time providing a variety of advanced features which make the machine convenient and useful to the operator.

It is a further object of this invention to provide such a machine that is capable of operating at a faster throughput rate than any previous machine able to determine the denomination of the scanned bills.

It is another object of this invention to provide an improved document counting and discriminating apparatus that is capable of flagging unidentified bills or bills meeting or failing to meet certain criteria. Bills may be flagged, for example, by routing flagged bills to a special location and/or suspending operation of the apparatus.

It is another object of this invention to provide an improved document counting and discriminating apparatus of the above type that can conveniently be caused to resume operation after an operator of the apparatus has examined an unidentified bill.

It is another object of this invention to provide an improved document counting and discriminating apparatus of the above type whereby the denomination or kind of any unidentified bill may be conveniently added to appropriate counters and the operation of the apparatus conveniently resumed when an operator determines that an unidentified bill is acceptable and whereby the operation of the apparatus may be conveniently resumed without adversely affecting any counter when an operator determines that an unidentified bill is not acceptable.

It is another object of this invention to provide an improved document counting and discriminating apparatus whereby the discriminator prompts the operator as to the identity of any flagged bills, such as by prompting the operator as to the denomination of any bill whose denomination has not been determined by the discriminator.

It is another object of this invention to provide an improved document discriminating apparatus that can flag and/or sort documents based on the forward or reverse orientation, i.e., top edge first or top edge last, of the document.

It is another object of this invention to provide a document discriminating apparatus that can detect and clear jammed currency bills in a simplistic and timely manner.

It is another object of the present invention to provide an improved method and apparatus for authenticating documents which improves the ability of a system to accurately reject improper documents while reducing the likelihood of rejecting genuine documents.

In accordance with one embodiment of the present invention, the foregoing objectives are realized by providing a currency counting and discrimination device for receiving a stack of currency bills, rapidly counting and discriminating the bills in the stack, and then re-stacking the bills. This device includes an input receptacle for receiving a stack of currency bills to be discriminated, a discriminating unit for discriminating the currency bills by denomination, one or more output receptacles for receiving the currency bills after they have been discriminated, and a transport mechanism for transporting the currency bills, one at a time, from the input receptacle past the discriminating unit and to one or more output receptacles. In one embodiment of the present invention, scanheads are positioned on both sides of a document transport path so as to permit scanning of either or both sides of a document.

According to one embodiment, each bill is scanned by the discriminating unit and generated scanned patterns are compared to and correlated against stored master patterns associated with genuine bills of one or more denominations. According to one embodiment, two or four characteristic patterns are generated and stored within system memory for each detectable bill-type. The stored patterns correspond, respectively, to optical scans performed on one or both sides of a bill along "forward" and "reverse" directions relative to the pattern printed on the bill.

According to the correlation technique of one embodiment, the pattern generated by scanning a bill under test and processing the sampled data is compared with each of the prestored characteristic patterns to generate, for each comparison, a correlation number representing the extent of similarity between corresponding ones of the plurality of data samples for the compared patterns. Bill identification is based on designating the scanned bill as belonging to the bill-type corresponding to the stored characteristic pattern for which the correlation number resulting from pattern comparison is determined to be the highest.

In one embodiment, the invention is particularly adapted to be implemented with a system programmed to track each identified currency identity so as to conveniently present aggregate totals for bills that have been identified at the end of a scan run.

According to one embodiment a currency discriminator is provided that counts and discriminates bills as they pass a discriminating unit and that flags an unidentified bill or one having a predetermined characteristic, for example a bill having a specified orientation, by transferring the flagged bill to a location where it can be conveniently examined by an operator and then suspending the operation of the discriminator. The operator may then examine the bill and determine whether the bill is acceptable or not. Denomination selection elements such as keys are provided to enable the operator with the depression of a single button to indicate the denomination of an unidentified but acceptable bill, to cause the value of the bill to be reflected in any appropriate counters, and to cause the discriminator to resume operation. A continuation selection element is also provided to enable the operator to cause the discriminator to resume operation without adversely affecting any counters when an unidentified bill is determined to be unacceptable.

According to one embodiment of the present invention, a discriminator is provided with a single output receptacle in which all bills are stacked after they pass by the discriminating unit. When an unidentified bill is detected, the discriminator halts operation with the unidentified bill positioned at a predetermined location within the stack such as at the top or back of the stack of bills in the output receptacle or at a predetermined position just prior to the stack. The bill may then be conveniently examined by the operator.

According to another embodiment of the present invention, a discriminator is provided with an examining station where unidentified bills are transferred before the discriminator halts operation. Upon determination that a bill is acceptable, the bill may then be transferred to the output receptacle in a single output receptacle discriminator or to an output receptacle associated with the denomination or other characteristic of the bill in a multi-output receptacle discriminator. Additionally, a reject receptacle may be provided for receiving bills which are determined to be unacceptable.

In one embodiment, a discriminator is provided with two or more output receptacles. All flagged bills are delivered to a separate output receptacle while the discriminator continues to process any remaining bills. Alternatively, bills that are positively determined to be suspect bills may be delivered to one output receptacle, all other flagged bills may be delivered to a second output receptacle, and all unflagged and identified bills may be delivered to one or more additional output receptacles. In another embodiment, suspect bills are routed to a separate output receptacle while all other bills are routed to one or more additional output receptacles.

The discriminator, in another embodiment is designed to suspend operation upon encountering one or more types of flagged bills. For example, the discriminator may halt operation when a no call bill is detected but not when a suspect bill is detected, e.g., when suspect bills are routed to an output receptacle separate from the output receptacle or receptacles to which other bills are routed. According to another embodiment, the discriminator does not suspend its operation upon detecting a flagged bill but rather continues processing any remaining bills, e.g., when flagged bills are routed to one or more output receptacles separate from the output receptacle or receptacles to which non-flagged bills are delivered.

According to one embodiment, the value of any flagged bill such as a no call is reconciled on-the-fly, that is, at the time such bill is encountered. According to one such embodiment, the discriminator suspends operation until the value of the flagged bill is reconciled.

According to another embodiment, the value of any flagged bills is reconciled after all bills have been processed. Alternatively, the reconciliation process may begin before all bills have been processed but without suspending the processing of the remaining bills.

According to one embodiment, denomination indicating means are provided to permit the operator to indicate the value of a flagged bill such as a no call. Examples of denomination indicating means include, for example, denomination selection elements such as keys, buttons, switches, lights, and displayed keys, denominations, or messages. Such elements may be selected by, for example, pressing an appropriate one of such elements or using scroll keys. The selection of a denomination may cause that denomination to be indicated to the discriminator or, alternatively, a denomination may first have to be selected and then indicated to the discriminator by selecting an accept, yes, or enter key.

According to one embodiment, prompting means are provided whereby the discriminator is able to suggest a denomination to the operator of the discriminator in connection with a flagged bill such a no call. Examples of criteria used in prompting a denomination to the operator in connection with a flagged bill include suggesting a denomination or a sequence of denominations based on a default basis, random basis, user-defined basis, manufacturer defined basis, last bill information, last no call information, last called denomination information, historical information, comparison of scanned and reference information such as correlation information. Means for prompting a denomination may include, for example, displaying a message, highlighting or illuminating a denomination selection or indicating element or associated light.

According to another embodiment of the present invention, a discriminator discriminates a stack of bills and flags bills having a given forward/reverse orientation. Accordingly, when a stack of bills predominately oriented in the forward or reverse direction is discriminated by the discriminator, any bills oriented in the opposite forward/reverse direction may be flagged. Any flagged bills may either be removed without replacement or re-oriented in the appropriate forward or reverse direction. As a result, a stack of bills may be generated in which all bills have the same forward/reverse orientation. Alternatively, in a multi-output receptacle discriminator, instead of flagging bills based on their forward/reverse orientation, bills having a forward orientation may be routed to one output receptacle and those having a reverse orientation may be routed to another output receptacle.

Likewise a discriminator may flag or sort bills based on their face orientation, that is face up or face down, or bills not belonging to a given denomination. Furthermore, the above criteria may be combined in various operating modes of the discriminator.

According to a sorting mode according to one embodiment, the operator of a document discriminator embodying a sorting mode according to the embodiment selects a document type to be separated from the remaining document types. For example, the operator may designate $20 bills to be off-sorted from a stack of U.S. currency bills having a plurality of denominations. When a stack of currency bills is subsequently processed by the currency discriminator, the discriminator proceeds to process all bills in the stack until it encounters the first $20 bill. The discriminator then halts operation with the first $20 bill being the last bill deposited in the output receptacle of the discriminator. The operator may then remove all the bills in the output receptacle and separate the $20 bill from the other bills. The currency discriminator may restart automatically when all the bills in the output receptacle are removed or alternatively, the discriminator may be designed to require the selection of a continuation key. The discriminator then continues to process the remaining bills until it encounters the first non-$20 bill. Upon encountering the first non-$20 bill, the discriminator halts operation with the non-$20 bill being the last bill deposited in the output receptacle. The operator may then remove all the bills in the output receptacle, separate the non-$20 bill from the preceding $20 bills, and place the bills in appropriate stacks. The discriminator then proceeds processing the remaining bills, now halting upon encountering the first $20 bill. The operation proceeds as above with the discriminator toggling between halting upon detecting the first bill not of the designated denomination and the first bill of the designated denomination. In this way, the operator may conveniently separate a designated denomination from bills having a plurality of denominations. Likewise the above operation may be repeated with the remaining bills to sort out a different denomination, for example, $10 bills. The above sorting operation is particularly suited for sorting bills in a stack wherein like denominated bills are grouped together. For example, it has been noticed that when customers make deposits at banks, the stacks of currency they give to the teller or otherwise deposit with the bank, e.g., night deposit box or automatic teller machine, tend to have bills grouped together by denomination.

The above sorting operation is particularly useful when employed with a currency discriminator having a single output receptacle. Nonetheless, the above sorting operation may be performed on multi-output receptacle discriminators as well, e.g., in a two output pocket discriminator wherein one pocket is dedicated to a specific purpose such as collecting suspect or unrecognized documents.

According to a jam detection and clearing embodiment of the present invention, a medium for detection and clearing of a jam in a currency scanning and discriminating machine is provided. The jam detection and clearing mechanism advantageously minimizes the efforts required by the machine operator and, therefore, reduces the time required to clear the jam. Furthermore, by minimizing the efforts of the operator, the likelihood the operator will become injured is lessened as is the probability the operator will damage the sensing device adjacent the transport path.

In accordance with the present invention, if a bill becomes jammed during normal operation, a controller within the machine detects the jam through at least one of several methods. The controller may monitor the time required for a currency bill to pass by two sets of optical sensors which perform different functions. Additionally, the controller may monitor the speed of the transport mechanism to detect whether the speed is significantly less than the normal operational speed. Once a jam is detected, the controller interrupts the driving of the transport mechanism.

The invention then provides for various manual and automatic devices which relieve the pressure exerted on the jammed bill by the transport mechanism. One such device for relieving the pressure is by providing a sensing device that may moved away from the transport path thereby increasing the gap between the sensing device and the transport path. The operator then can activate the transport mechanism in a reverse or forward direction to remove the jammed currency bill. The transport mechanism is then returned to its operational position, and the currency scanning and discriminating machine is ready to be operated.

According to one embodiment a document to be authenticated is illuminated with ultraviolet light and the amount of ultraviolet light which is reflected off the document is measured. Based on the amount of ultraviolet light which is detected, the document is either authenticated or rejected. In the case of documents being authenticated relative to United States currency, a bill is rejected if a high level of reflected ultraviolet light is not detected.

In another embodiment, a document is illuminated with ultraviolet light and both the amount of reflected ultraviolet light and the amount of emitted visible light are measured. Based on the amount of ultraviolet light detected and the amount of visible light detected, a document is either authenticated or rejected. In the case of documents being authenticated relative to United States currency, a bill is rejected if either a high level of reflected ultraviolet light is not detected or even a low level of visible light is detected.

It is known that some counterfeit United States bills fluoresce, or emit visible light, when illuminated by ultraviolet light. As genuine United States currency does not fluoresce, the emission of visible light has been employed as a means of detecting counterfeit United States currency. However, it has been found that not all counterfeit United States bills fluoresce; and hence, such counterfeits will not be detected by the above described fluorescence test.

It has been found that genuine United States currency reflects a high level of ultraviolet light when illuminated by an ultraviolet light source. It has also been found that some counterfeit United States bills do not reflect a high level of ultraviolet light. Such counterfeit bills may or may not also fluoresce under ultraviolet light. The present invention employs an authentication test wherein the amount of reflected ultraviolet light is measured and a bill is rejected if it does not reflect a high amount of ultraviolet light. By employing such a test, counterfeit United States bills which do not reflect a high level of ultraviolet light may be properly rejected.

While not all counterfeit United States bills fail to reflect a high level of ultraviolet light and hence not all counterfeit United States bills will be detected using this test, the present invention provides an additional means for detecting counterfeit bills which might otherwise go undetected. Furthermore, the likelihood of a counterfeit United States bill going undetected may be further reduced by employing an alternative embodiment of the present invention wherein both the amount of reflected ultraviolet light and the amount of emitted visible light are measured. In such a system, a bill is rejected as counterfeit if either it fails to reflect a high level of ultraviolet light or it fluoresces.

The above described embodiments may be adapted to authenticate currencies from other countries and other types of documents such as food stamps and checks. For instance some genuine documents may be designed to reflect ultraviolet light only in certain locations and/or in a predetermined pattern. An alternative embodiment of the present invention may be designed to accept documents which exhibit similar characteristics while rejecting those which do not. Likewise, an alternative embodiment of the present invention may be employed to authenticate documents based on both their characteristics with respect to reflected ultraviolet light and their characteristics with respect to fluorescent emissions, e.g., detecting the amount, location, and/or pattern of fluorescent emissions.

According to one embodiment, the thresholds for one or more authentication tests such as ultraviolet, fluorescence, and/or magnetic tests may be adjustable between high or low sensitivity settings. Each setting may be adjusted among a plurality of settings of varying sensitivity. These tests and plurality of setting may be employed in, for example, note counters or currency discriminators.

According to one embodiment, the selection of a high or low setting for one or more of the above tests may be on a global basis, that is, the same setting will apply to all processed documents.

According to one embodiment, the selection of a high or low setting for one or more of the above tests may be on an individual document-type basis such as by providing for various settings based on the denomination of a currency bill. For example, the settings for the above tests may be set to lower sensitivities for bills of lower denomational value such as $1s and $2s and to higher sensitivities for bills of higher denomination value such as $20s, $50s, and $100s. Accordingly the chance of wrongly flagging genuine bills of low denominational values as suspect can be reduced while at the same time the chance of wrongly failing to detect counterfeit bills of higher denominational values can also be reduced.

The above summary of the present invention is not intended to represent each embodiment, or every aspect of the present invention. This is the purpose of the figures and detailed description which follow.

### Brief Description Of The Drawings

FIG. 1 is a perspective view of a currency scanning and counting machine embodying the present invention;
FIG. 2 is a functional block diagram of the currency scanning and counting machine of FIG. 1 illustrating an embodiment in which a scanhead is arranged on each side of a transport path;
Fig. 3 is a flow chart illustrating the sequence of operations involved in determining the bill denomination from the correlation results;
FIG. 4a is a flow chart illustrating the sequence of operations involved in determining the bill denomination from the correlation results using data retrieved from the green side of U.S. bills according to one embodiment of the present invention;
FIGs. 4b and 4c are a flow chart illustrating the sequence of operations involved in determining the bill denomination from the correlation results using data retrieved from the black side of U.S. bills;
Fig. 5 is a vertical sectional view approximately through the center of the machine of FIG. 1 which illustrates the transport rolls and mechanisms in a side elevation;
Fig. 6 is a section view of the sensing device;
FIG. 7a is a section view of the lower member of the sensing device and an end elevation of the upper member of the sensing device;
FIG. 7b is a section view of the lower member of the sensing device and an end elevation of the upper member of the sensing device in which the handles are latched onto a shaft;
FIG. 8 is a section view of the sensing device incorporating solenoids for separating the two members of the sensing device;
FIG. 9 is an enlarged bottom plan view of the lower member of the scanning device of Fig. 6 or 8 and the passive transport rolls mounted on the lower member;
FIG. 10 is a bottom plan view of the upper member in the scanning device of Fig. 6 or 8 which includes the upper scanhead;
FIG. 11 is a block diagram illustrating the components used by the jam detection and cleaning mechanism;
FIG. 12 is an enlarged plan view of the control panel and the display panel of the machine in FIG. 1;
FIGS. 13a-13c are flow charts illustrating the sequential procedure followed in clearing a jammed currency bill according to an embodiment of the present invention.
Fig. 14 is a functional block diagram illustrating one embodiment of a document authenticator and discriminator according to the present invention;
Fig. 15 is a functional block diagram illustrating another embodiment of a document authenticator and discriminator according to the present invention;
Fig. 16a is a functional block diagram illustrating another embodiment of a document authenticator and discriminator according to the present invention;
Fig. 16b is a functional block diagram illustrating another embodiment of a document authenticator and discriminator according to the present invention;
Fig. 17 is an enlarged plan view of the control and display panel in the machine of FIG. 1;
Fig. 18 is a flow chart illustrating the sequential procedure involved in a sorting operation according to an embodiment of the present invention.
FIGs. 19-24 are enlarged plan views of various embodiments of control panels;
Fig. 25 is an exploded perspective view of a touch screen device.
FIG. 26a is a side view of one embodiment of a document authenticating system according to the present invention;
FIG. 26b is a top view of the embodiment of FIG. 26a along the direction 26b;
FIG. 26c is a top view of the embodiment of FIG. 26a along the direction 26c; and
Fig. 27 is a functional block diagram illustrating one embodiment of a document authenticating system according to the present invention.

### Detailed Description Of The Embodiments

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the spirit and scope of the invention as defined by the appended claims.

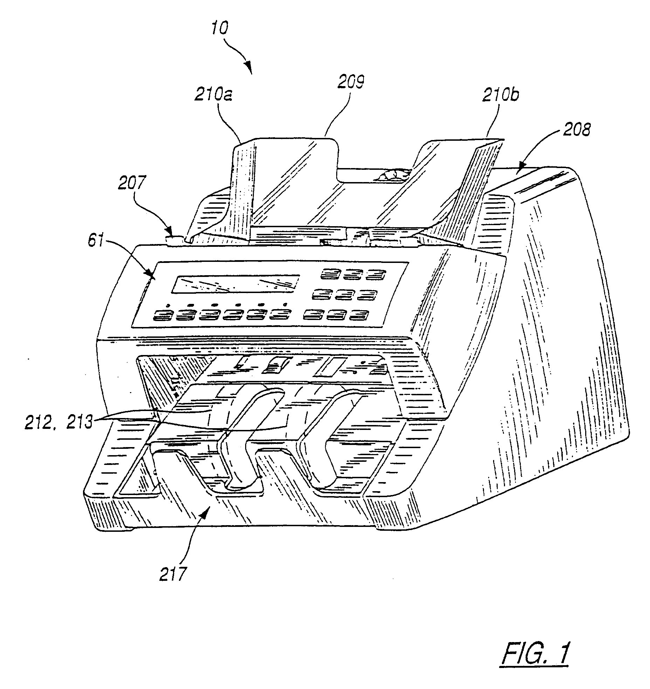

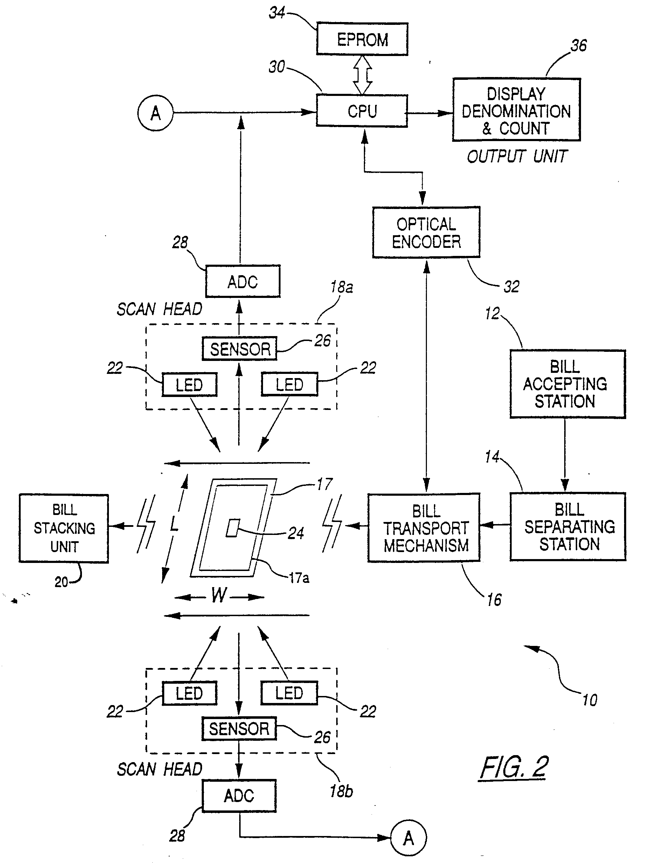

Referring now to FIGs. 1 and 2, there is shown one embodiment of a currency scanning and counting machine 10 according to the present invention. The machine 10 includes an input receptacle or bill accepting station or input hopper 12, 209 where stacks of currency bills that need to be identified and counted are positioned. Bills in the input receptacle are acted upon by a bill separating station 14 which functions to pick out or separate one bill at a time for being sequentially relayed by a bill transport mechanism 16 (FIG. 2), according to a precisely predetermined transport path, between a pair of sensors or scanheads 18a, 18b where the currency denomination of the bill is scanned and identified. In one embodiment, bills are scanned and identified at a rate in excess of 800 bills per minute. In the embodiment depicted, each scanhead 18a, 18b is an optical scanhead that scans for characteristic information from a scanned bill 17 which is used to identify the denomination of the bill. The scanned bill 17 is then transported to an output receptacle or bill stacking station 20, 217 where bills so processed are stacked for subsequent removal. As seen in FIG. 1, the output receptacle 217 comprises stacker wheels 212, 213 which project upwardly through a pair of openings in a stacker plate 214 to receive the bills as they are advanced across the downwardly sloping upper surface of the stacker plate 214. The stacker wheels 212 and 213 are supported for rotational movement about a shaft 215 journalled on the rigid frame and driven by a stacker motor 216.

The operation of the currency scanning and counting machine 10 of FIGs. 1 and 2 is described in more detail in PCT application Serial No. PCT/US95/02992. See also U.S. Pat. No. 5,295,196. Such discrimination systems may process bills at speeds of the order of 800 to 1500 bills per minute, including speeds in excess of 800 and 1000 bills per minute according to various embodiments.

Each optical scanhead 18a, 18b preferably comprises a pair of light sources 22 directing light onto the bill transport path so as to illuminate a substantially rectangular light strip 24 upon a currency bill 17 positioned on the transport path adjacent the scanhead 18. Light reflected off the illuminated strip 24 is sensed by a photodetector 26 positioned between the two light sources. The analog output of the photodetector 26 is converted into a digital signal by means of an analog-to-digital (ADC) convertor unit 28 whose output is fed as a digital input to a central processing unit (CPU) 30.

While scanheads 18a, 18b of FIG. 2 are optical scanheads, it should be understood that it may be designed to detect a variety of characteristic information from currency bills. Additionally, the scanhead may employ a variety of detection means such as magnetic, optical, electrical conductivity, and capacitive sensors.

Referring again to FIG. 2, as a bill 17 traverses the scanheads 18a, 18b, the coherent light strip 24 effectively scans the bill. A series of detected reflectance signals are obtained across the the bill and the resulting analog signals are digitized under control of the CPU 30 to yield a fixed number of digital reflectance data samples. The normalized reflectance data represents a characteristic pattern that is unique for a given bill denomination and provides sufficient distinguishing features among characteristic patterns for different currency denominations.

In order to ensure strict correspondence between reflectance samples obtained by scanning of successive bills, the reflectance sampling process is preferably controlled through the CPU 30 by means of an optical encoder 32 which is linked to the bill transport mechanism 16 and precisely tracks the physical movement of the bill 17 between the scanheads 18a, 18b. More specifically, the optical encoder 32 is linked to the rotary motion of the drive motor which generates the movement imparted to the bill along the transport path. In addition, the mechanics of the feed mechanism ensure that positive contact is maintained between the bill and the transport path, particularly when the bill is being scanned by the scanheads. Under these conditions, the optical encoder 32 is capable of precisely tracking the movement of the bill 17 relative to the light strips 24 generated by the scanheads 18a, 18b by monitoring the rotary motion of the drive motor.

The optical sensing and correlation technique is based upon using the above process to generate a series of stored intensity signal patterns using genuine bills for each denomination of currency that is to be detected. According to one embodiment, two or four sets of master intensity signal samples are generated and stored within the system memory, preferably in the form of an EPROM 34 (see FIG. 2), for each detectable currency denomination. According to one embodiment these are sets of master green-surface intensity signal samples. In the case of U.S. currency, the sets of master intensity signal samples for each bill are generated from optical scans, performed on the green surface of the bill and taken along both the "forward" and "reverse" directions relative to the pattern printed on the bill. Alternatively, the optical scanning may be performed on the black side of U.S. currency bills or on either surface of foreign bills. Additionally, the optical scaning may be performed on both sides of a bill.

The CPU 30 is programmed to identify the denomination of the scanned bill as corresponding to the set of stored intensity signal samples for which the correlation number resulting from pattern comparison is found to be the highest. If a "positive" call can not be made for a scanned bill, an error signal is generated.

Using the above sensing and correlation approach, the CPU 30 is programmed to count the number of bills belonging to a particular currency denomination as part of a given set of bills that have been scanned for a given scan batch, and to determine the aggregate total of the currency amount represented by the bills scanned during a scan batch. The CPU 30 is also linked to an output unit 36 (FIG. 2) which is adapted to provide a display of the number of bills counted, the breakdown of the bills in terms of currency denomination, and the aggregate total of the currency value represented by counted bills. The output unit 36 can also be adapted to provide a print-out of the displayed information in a desired format.

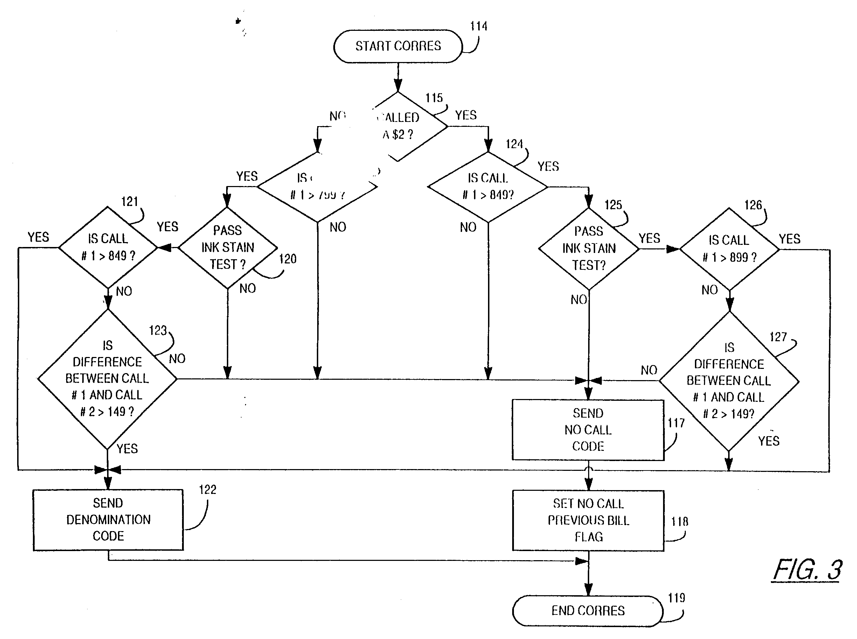

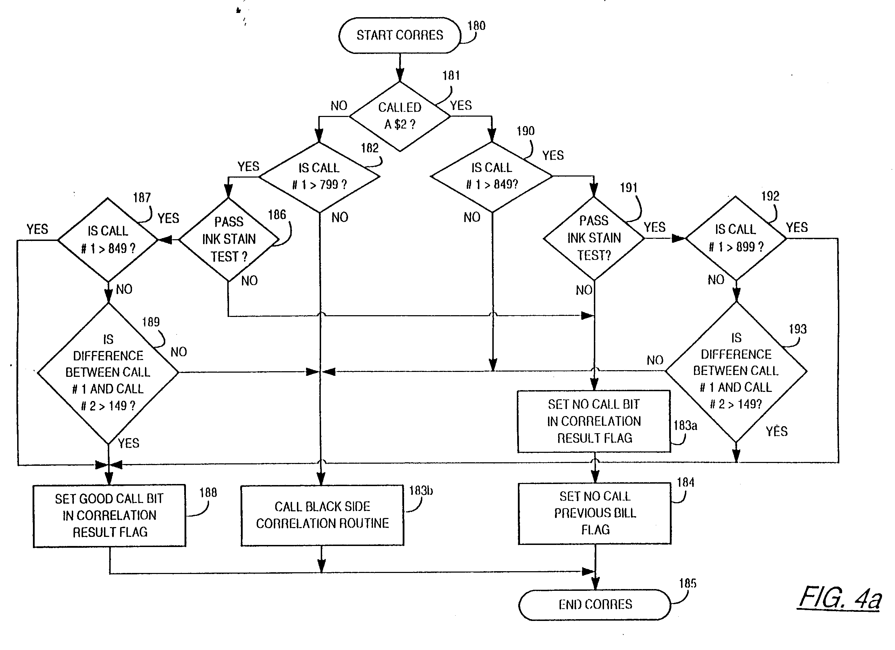

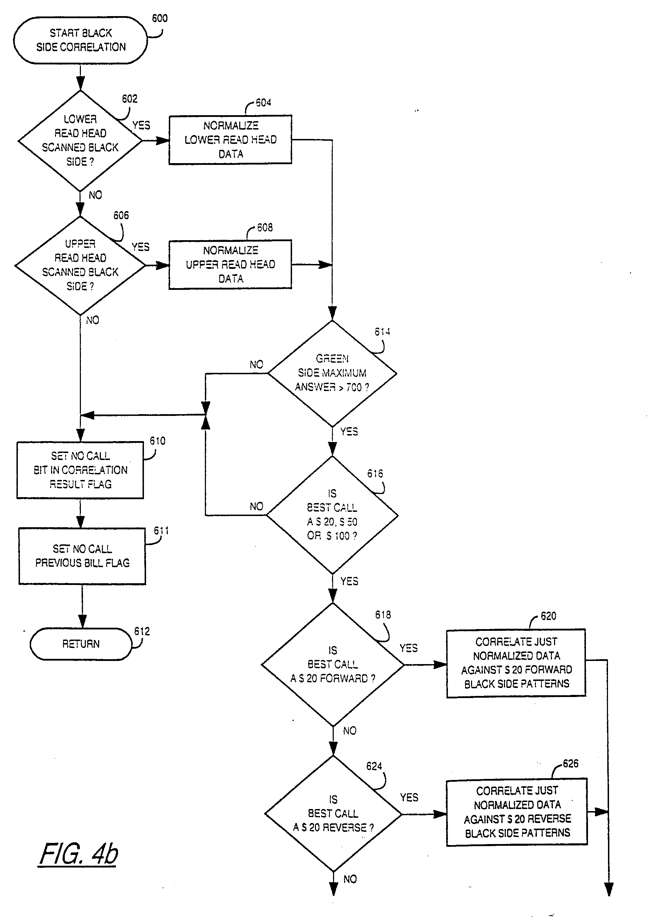

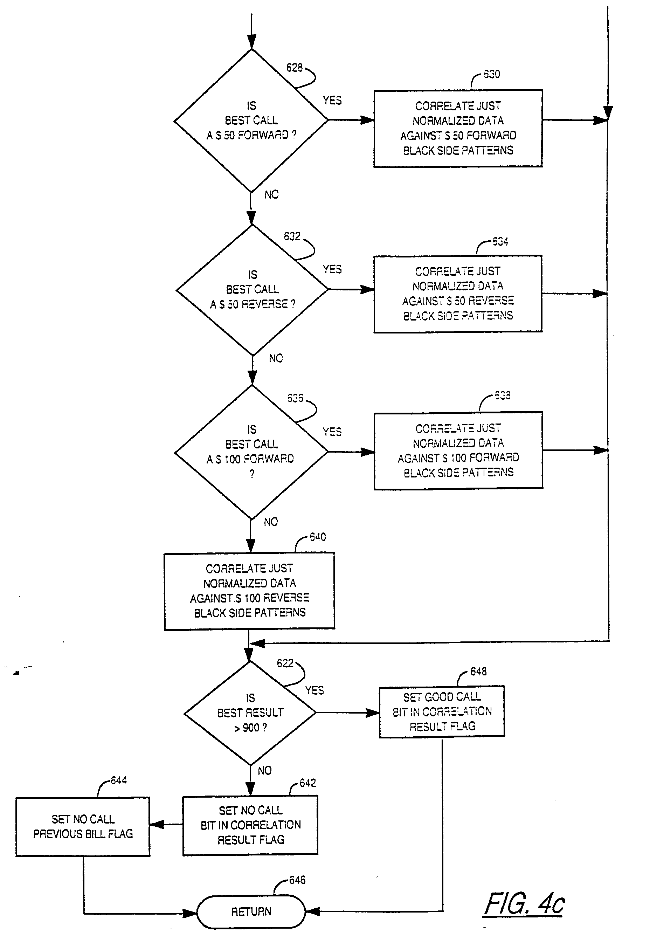

A correlation formula which may be used in the present invention is disclosed and explain in U.S. Pat. No. 5,295,196 and PCT application Serial No. PCT/US95/02992. FIGs. 3 and 4a-4c illustrated thresholding tests which may be peformed by the discriminator in conjunction with determining the denominations of scanned bills. These figures are described in more detail in PCT application Serial No. PCT/US95/02992.

In some embodiments of the present invention the operation of the discriminator is suspended when a bill such as a no call is to be flagged. In some embodiments the transport mechanism is brought to a halt so that the flagged bill is the last bill deposited in an output receptacle or inspection station. The manner of suspending the operation of the discriminator and halting of the transport mechanism is explained in more detailed in U.S. Pat. No. 5,295,196 and PCT application Serial No. PCT/US95/02992.

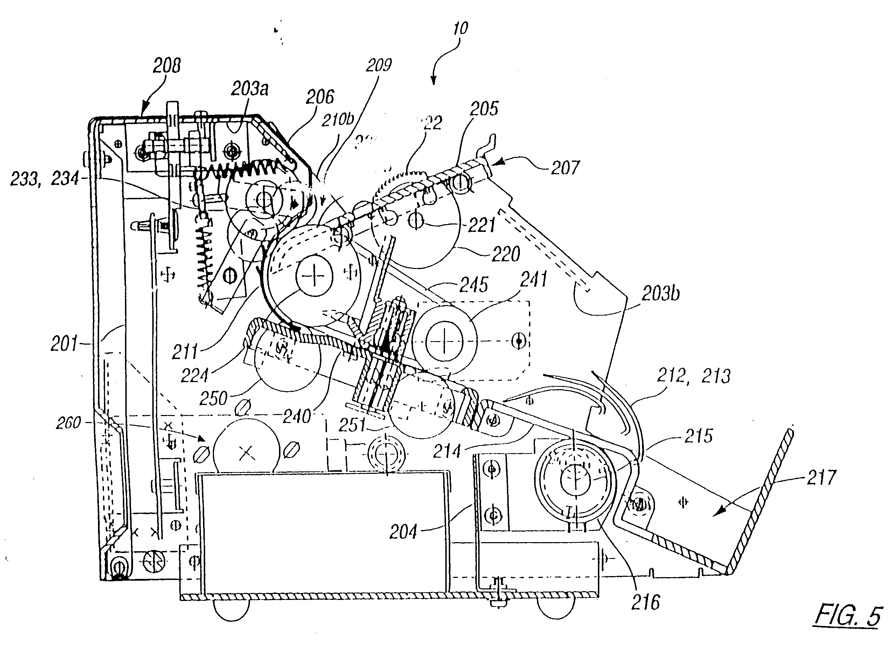

Referring now to Fig. 5, the mechanical portions of a currency scanning and counting machine 10 include a rigid frame formed by a pair of side plates 201 (only one shown), a pair of top plates 203a and 203b, and a lower front plate 204. The input receptacle region for receiving a stack of bills to be processed is formed by downwardly sloping and converging walls 205 and 206 which are parts of removable covers 207 and 208, respectively, that snap onto the frame. The rear wall 206 supports the removable input hopper 209 which includes a pair of vertically disposed side walls 210a and 210b (both shown in FIG. 1).

To initiate the scanning process, currency bills are stacked on the bottom wall 205 and are stripped, one at a time, from the bottom of the stack. The bills are in turn, is supported across the side walls 201. The auxiliary feed wheels 220 project through a pair of slots formed in the cover 207. Each auxiliary feed wheel 220 includes a raised high-friction, serrated surface 222 around a portion of the periphery which engages the bottom bill of the input stack as the auxiliary feed wheels 220 rotate to initiate the movement of the bottom bill from the stack. The serrated surface 222 projects radially beyond the rest of the wheel periphery so that the wheels "jog" the bill stack during each revolution so as to loosen the bottom currency bill within the stack and the bottom bill from the stack. The auxiliary feed wheels 220 move each stripped bill onto a drive roll 223 mounted on a driven shaft 224 supported across the side walls 201.

To ensure firm engagement between the drive roll 223 and the currency bill being fed, an idler roll 230 urges each incoming bill against a smooth central surface of the drive roll 223. The idler roll 230 is journalled on a pair of arms which are pivotally mounted on a support shaft. A pair of stripping wheels 233 and 234 are also mounted on the shaft 232 on opposite sides of the idler roll 230. The grooves in these two stripping wheels 233, 234 are registered with the central ribs in the two grooved surfaces of the drive roll 223. Although the idler roll 230 and the stripping wheels 233, 234 are mounted behind the guideway 211, the guideway 211 is apertured to allow the idler roll 230 and the stripping wheels 233, 234 to engage the bills on the front side of the guideway 211.

To prepare the bills for scanning, the bills transported by the drive roll 223 engage a flat guide plate 240 on which a sensing device is mounted at the lower end of the curved guideway 211. Currency bills are positively driven along the flat plate 240 by means of a transport roll arrangement which includes the drive roll 223 at one end of the flat plate 240 and a smaller drive roll 241 at the other end of the plate. Both the drive roll 223 and the smaller drive roll 241 include pairs of smooth raised cylindrical surfaces which hold the bill flat against the plate 240. A transport motor 260 drives both drive roll 223 and smaller drive roll 241 through a series of belts and pulleys. Additionally, the auxiliary feed wheels 220 are driven by the transport motor 260 via a pulley or belt attached on drive roll 223. A pair of O rings 245 (only one shown) fit into grooves formed in both the smaller drive roll 241 and the drive roll 223 to continuously engage the bill between the two rolls 223 and 241 and transport the bill while holding it flat against the guide plate 240.

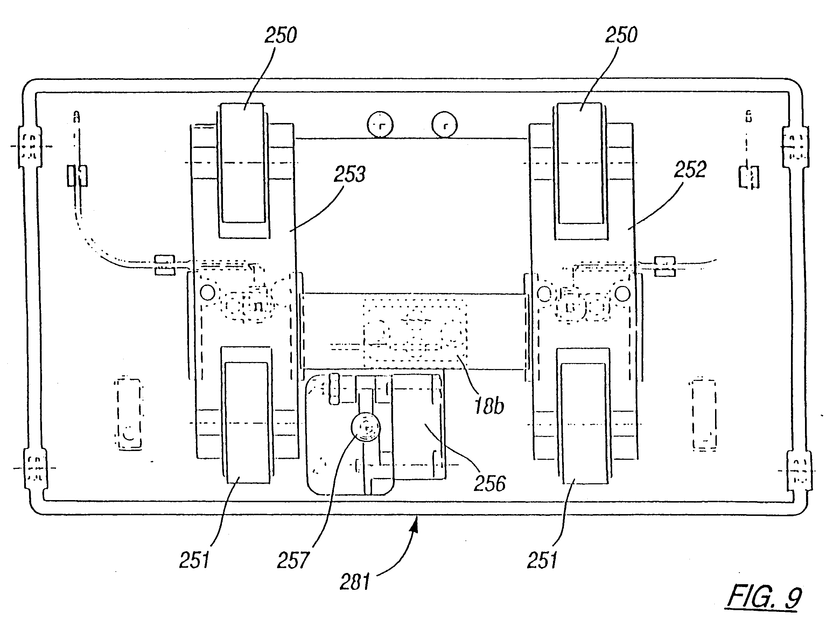

The flat guide plate 240 is provided with openings through which the raised surfaces of both the drive roll 223 and the smaller driven roll 241 are subjected to counter-rotating contact with corresponding pairs of passive transport rolls 250 and 251 having high-friction rubber surfaces. The passive rolls 250, 251 are mounted on the underside of the flat plate 240 in such a manner as to be freewheeling about their axes and biased into counter-rotating contact with their corresponding drive rolls 223, 241. The passive rolls 250, 251 are biased into contact with their corresponding drive rolls 223 and 241 by means of a pair of leaf springs 252, 253 (shown in FIG. 9).

The points of contact between the drive rolls 223, 241 and passive rolls 250, 251 are preferably coplanar with the level surface of the flat plate 240 so that currency bills can be positively driven along the upper surface of the flat plate 240 in a smooth, flat manner. The distance between the axes of the two drive rolls 223 and 241 is selected to be just short of the length of the narrow dimension of the currency bills. Accordingly, the bills are firmly gripped under uniform pressure between both pairs of transport rolls, thereby minimizing the possibility of bills being skewed or twisted which enhances the reliability of the overall scanning process.

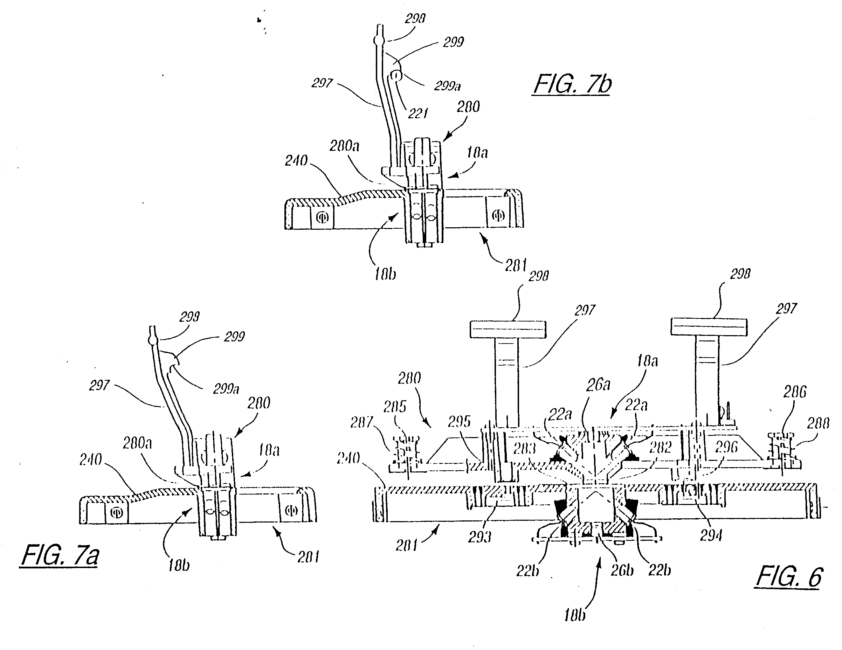

The sensing device which includes a pair of scanheads 18a and 18b is shown in detail in FIGS. 6, 7a, and 7b. It can be seen that the housing for each scanhead 18a and 18b is formed as an integral part of a unitary molded plastic support member 280 and 281. The lower member 281 forms the flat plate 240 that receives the bills from the drive roll 223 and supports the bills as they are driven past the scanheads 18a and 18b.

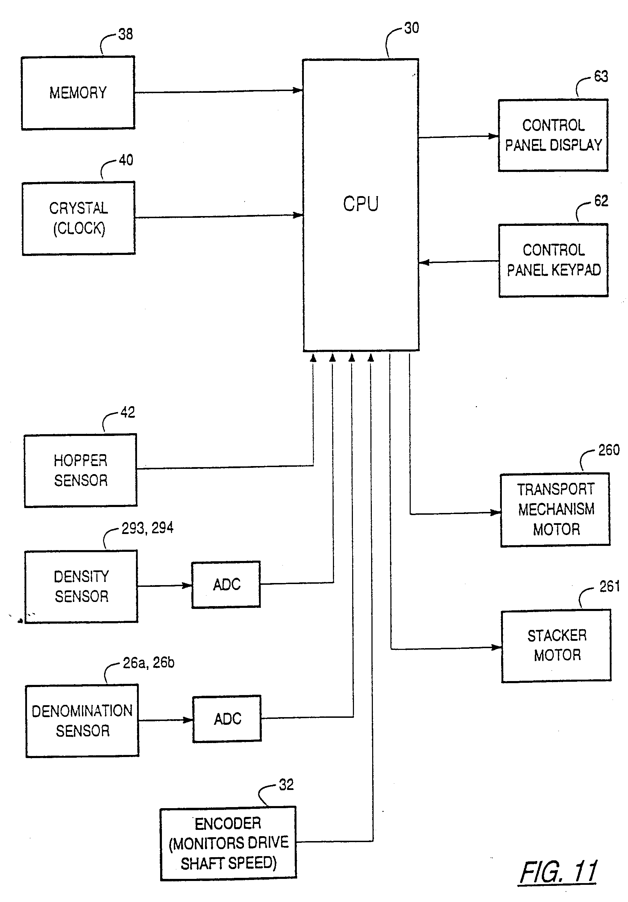

Each of the two optical scanheads 18a and 18b housed in the support members 280, 281 includes a pair of light sources acting in combination to uniformly illuminate strips of a desired dimension on opposite sides of a bill as it is transported across the flat guide plate 240. Thus, the upper scanhead 18a includes a pair of LEDs 22a directing light downwardly through an optical mask on top of a lens 282 onto a bill traversing the flat guide plate 240 beneath the scanhead 18a. Both LEDs 22a are angularly disposed relative to the vertical axis of the upper scanhead 18a so that their respective light beams combine to illuminate the desired light strip defined by an aperture in the mask. The scanhead 18a also includes a photodetector 26a mounted directly over the center of the illuminated strip for sensing the light reflected off the strip. The photodetector 26a is linked to a CPU 30 (See Fig. 11) through an analog-to-digital convertor (ADC) for processing the sensed data. Similarly, the lower scanhead 18b which includes a pair of LEDs 22b, a lens 283, and a photodetector 26b communicates with the CPU 30 through an ADC. The manner in which this data is processed is explained in detail in PCT patent application Serial No. PCT/US95/02992 which is incorporated herein by reference in its entirety.

The upper member 280 and lower member 281 are mounted facing each other so that the lenses 282 and 283 of the two scanheads 18a, 18b define a narrow gap through which each bill is transported. Generally, the gap is approximately 0.025 inch when the machine is in the operational mode. The upper support member 280 includes a tapered entry guide 280a which guides an incoming bill into the gap between the opposed lenses 282 and 283.

Doubling or overlapping of bills in the illustrative transport mechanism is detected by two additional photosensors which are located on a common transverse axis that is perpendicular to the direction of bill flow. The photosensors include photodetectors 293 and 294 mounted within the lower member 281 in immediate opposition to corresponding light sources 295 and 296 mounted in the upper member 280. The photodetectors 293, 294 detect beams of light directed downwardly onto the bill transport path from the light sources 295, 296 and generate analog outputs which correspond to the sensed light passing through the bill. Each such output is converted into a digital signal by a conventional ADC unit whose output is input to, and processed by, the CPU 30.

The presence of a bill adjacent the photosensors causes a change in the intensity of the detected light, and the corresponding changes in the analog outputs of the photodetectors 293 and 294 serve as a convenient means for density-based measurements for detecting the presence of "doubles" (two or more overlaid or overlapped bills) during the currency scanning process. For instance, the photodetectors 293, 294 may be used to collect a predefined number of density measurements on a test bill, and the average density value for a bill may be compared to predetermined density thresholds (based, for instance, on standardized density readings for master bills) to determine the presence of overlaid bills or doubles. Thus, this density detecting system ensures that no more than one bill is being scanned at a time.

Although the machine has been designed to greatly minimize the jamming of currency bills while being moved along the transport path, situations arise in which the machine will become jammed, especially in the area of the scanheads 18a, 18b. For example, an older currency bill which is not as "crisp" as a newer bill tends to buckle when its leading edge engages the guiding members within the transport path, especially in the region adjacent the sensing devices. As it begins to obstruct the transport path, the buckled bill in the transport path loses its velocity. The bills trailing the buckled bill then come into contact with the buckled bill and cause the transport path to become jammed. Additionally, currency bills with bent comers or a bill in the stack that is folded can catch on edges along the transport path as well. In any event, it is useful to have a simple means in which to clear a jam that may occur, especially beneath the upper member 280.

The lower member 281 is attached rigidly to the machine frame. However, the upper member 280 is slidably mounted on a pair of posts 285 and 286 on the machine frame thereby providing limited vertical movement. A pair of springs 287 and 288 bias the upper member 280 to its lowermost position in the operational mode. In one embodiment, a pair of handles 297 connected to upper member 280 are exposed once an access cover is opened. For example, removing the removable hopper 209 exposes the handles 297. Once exposed, the operator lifts the handles 297 by their gripping portion 298 and moves the connecting portion 299 over a structure rigidly affixed to the frame. An engagement surface 299a then engages the rigid structure to support the upper member 280. In FIG. 7b, the engagement surface 299a of each handle 297 is semi-circular and the structure to which it is connected is the shaft 221 which is also shown in Fig. 5. When positioned in this retracted position, the gap between the lenses 282 and 283 of the two scanheads 18a, 18b increases and is in the range from about 0.075 inch to about 0.20 inch.

Generally, the handles 297 are flexible to allow them to be deflected in a direction parallel to the direction a currency bill moves along the transport path. Thus, when attaching the handles 297 to and detaching them from the shaft 221 in FIGS. 7a and 7b, the operator can move the connecting portion 299 laterally across the shaft 221.

Alternatively, the upper member 280 can be locked into the retracted position by a brace member which engages the posts 285, 286. Small handles connected to the upper member 280 near the posts 285, 286 are grasped to lift the upper member 280. When in the retracted position, the rigid brace member attached to the frame or handles is positioned between the posts 285, 286 and a portion of the handles which acts against the springs 287, 288 and restrains the upper member 280 from returning to the operational position. In another alternative, small handles having a profile similar to the handle 297 in FIGS. 7a and 7b could latch onto rigid structures attached to the frame near the posts 285, 286.

In yet another alternative, the upper member 280 is separated from the lower member 281 without removing any access cover like the removable hopper 209. The operator moves a lever which is connected to one of the members 280, 281 and is exposed on the exterior of the machine. The movement of the lever then increases the gap between the two members 280, 281. For example, the lever is attached to a cam which when rotated forces the two members 280, 281 apart.

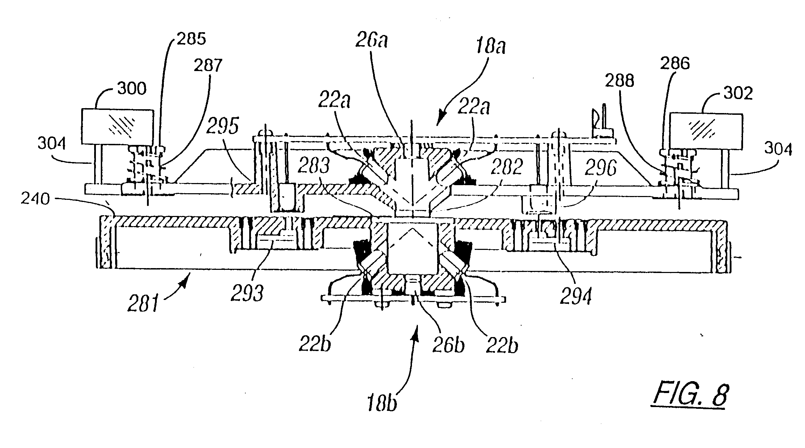

In yet a further alternative, the upper member 280 could be automatically converted between the operational position and the retracted position by use of a pair of solenoids 300, 302 as shown in Fig. 8. The solenoids 300, 302 are affixed onto the rigid frame near the posts 285, 286. Each solenoid 300, 302 has a displacing member 304 which attaches to the upper member 280. When energized, the displacing member 304 of the solenoids 300, 302 act against the force of the springs 286, 287 and move the upper member 280 from the operational position to the retracted position. Although the solenoids 300, 302 are shown attached to the upper member 280, they can also be attached to the lower member 281. In such an embodiment, the solenoids 300, 302 then push the upper member 280 away from the lower member 281 against the force of the springs 287, 288.

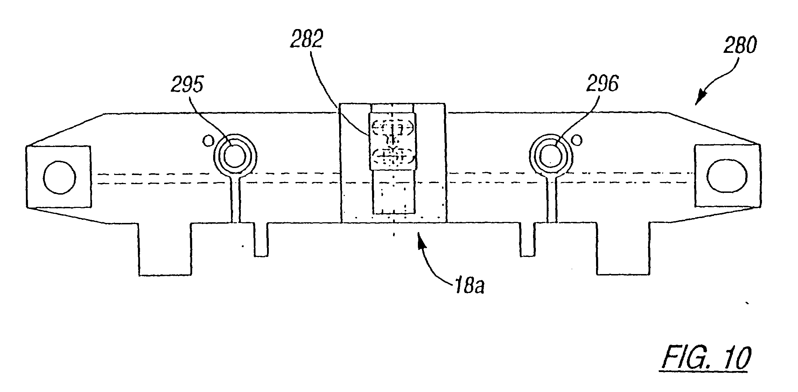

Fig. 9 shows a bottom plan view of the lower member 281 of the scanning device and the passive transport rolls 250, 251. Fig. 10 illustrates a bottom plan view of the upper member 280 including the upper scanhead 18. Both figures are applicable to the scanning device illustrated in Fig. 6 or 5.

As shown in Fig. 11, the CPU 30 of the machine 10 is coupled to various components within the jam detection and clearing mechanism. The CPU 30 is coupled to a memory device 38 and receives inputs from a crystal 40 which serves as the time base for the CPU 30. The CPU 30 also receives operator input signals from the keypad 62 on the control panel 61 and provides the user with information via the display 63 on the control panel 61. The CPU 30 also controls the operation of both the stacker motor 261 and the transport mechanism motor 260.

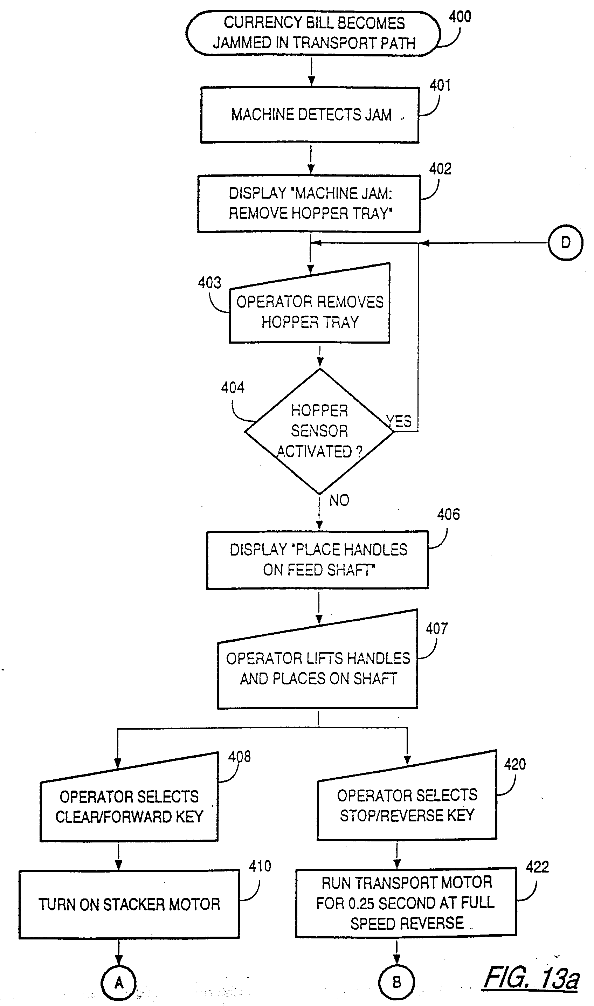

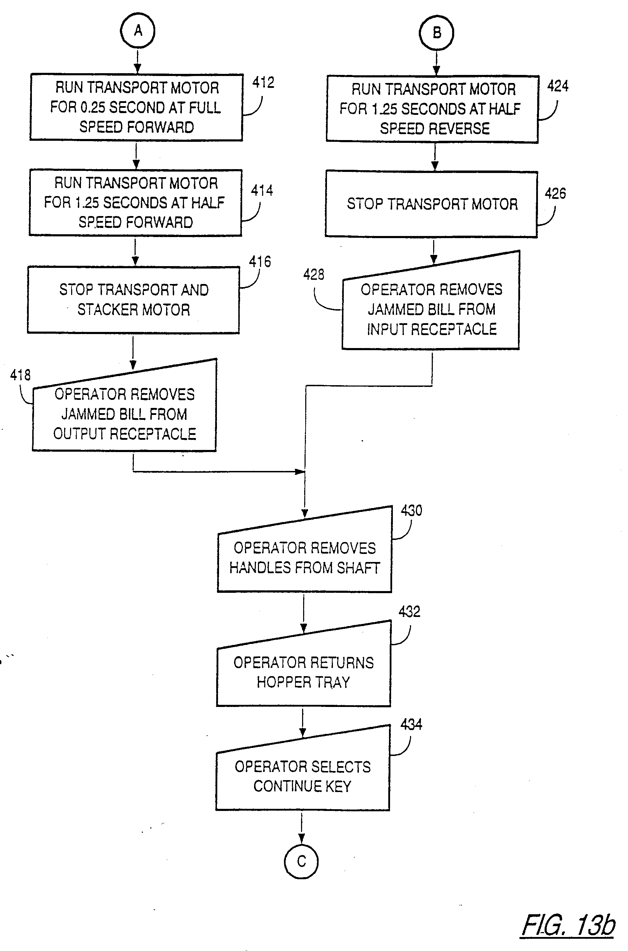

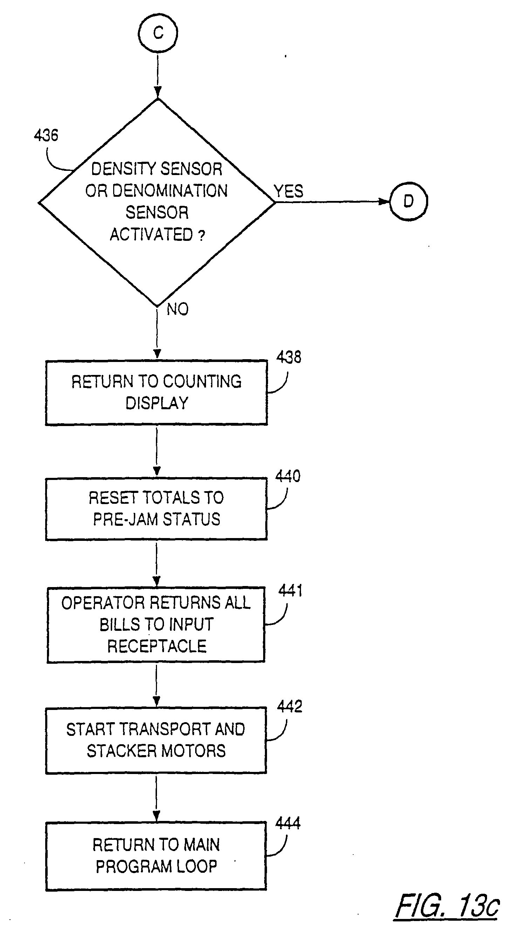

With respect to the detection of a jam which is described in detail below in reference to FIGS. 13a-13c, the CPU 30 processes the output of the denomination sensors 26a, 26b and the density sensors 293, 294. The outputs of both of these sensors are converted to digital signals by standard ADCs before being received by the CPU 30. Also, the CPU 30 monitors the velocity of the drive shaft or the transport mechanism via the encoder 32 which is described in detail below. Additionally, the CPU 30 monitors a hopper sensor 42 placed adjacent the removable hopper 209 which indicates whether the hopper 209 is installed or detached from the machine 10.

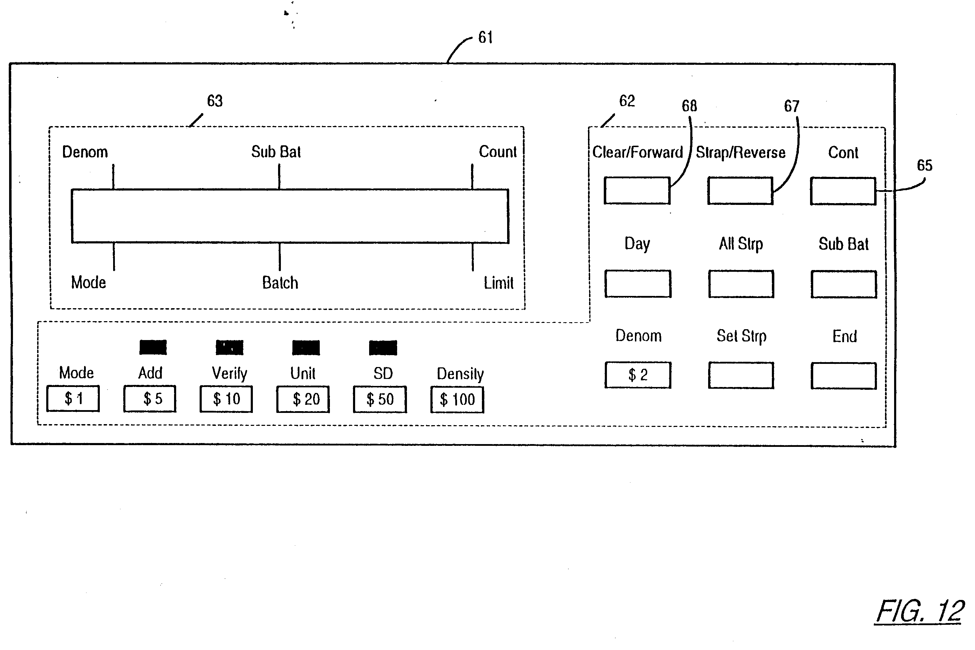

Once the lower member 281 and the upper member 280 are separated, the jammed currency bill must still be removed from the transport path. This is accomplished by operating the bill transport mechanism in a reverse or forward motion to clear the jammed bill. As shown in Fig. 12, the control panel 61 (also shown in FIG. 1) includes the display 63 as well as the keypad 62 having a plurality of keys actuated by the operator to perform various functions. A reverse key 67 and a forward key 68 on the keypad 62 send a reverse signal and a forward signal, respectively, to the CPU 30 which instructs the transport mechanism to operate in the reverse or forward mode. Thus, when the operator actuates the reverse key 67, the CPU 30 receives a reverse signal and instructs the transport motor 260 to rotate in a reverse direction. The jammed currency bill then moves back through the guideway 211 and can be accessed at the opening near wall 205 adjacent the nips formed by roll 223 and stripping wheels 233, 234 as shown in Fig. 5. If the jammed currency bill is not accessible after actuation of the reverse key 67, then the operator can activate the forward key 68 to attempt to move the jammed bill forward. This will result in the currency bill being accessible at the output receptacle 217. No data is processed at this point and the jammed bill must be returned to the stack. The operator then returns the upper member 280 to the operational position by utilzing the handles 297 or activating a key on the control panel 261 if the separation of the members 280, 281, occurs via solenoids.

Alternatively, the machine can include a manual turn-knob which is connected to the drive shaft 221 of the drive roll 223 instead of utilizing the reverse key 67 and the forward key 68. After the members 280, 281 are separated, the operator then manually turns the knob in a forward or reverse direction to transport the jammed currency bill along the transport path and clear the jam.

FIGS. 13a-13c are flow charts which illustrate the process in which a jammed bill is detected and the resultant actions by the operator and the machine. After a bill becomes jammed along the transport path (step 400), the machine detects the jam (step 401). Three examples of ways the machine may accomplish this task include the following. First, if the time required for a currency bill to pass by one of the density photodetector sensors 293, 294 exceeds a threshold limit, then a jam has likely occurred. Second, if the time required for a bill to pass through the currency denomination photodetectors 26a and 26b exceeds a threshold limit, then a jam is probable. Generally, these upper threshold limits are approximately 0.25 second (the normal time required for a bill to pass by one of these sensors is approximately 0.025 second). The third method by which a jam can be detected is by monitoring the encoder 32 which indicates the shaft speed of the transport motor 260 powering the transport mechanism. More specifically, the optical encoder 32 is linked to the output shaft of the transport motor 260 which drives the transport mechanism that moves the bill along the transport path. The optical encoder 32 sends signals to the CPU 30 corresponding to successive increments of angular displacement of the drive shaft of the transport motor 260. Thus, if the signals received by the CPU 30 from the encoder 32 drop below a threshold limit in a selected time period, then the shaft speed of the transport motor 260 has been reduced by the occurrence of the jam which increases the load on the transport motor 260

Once the CPU 30 receives a jam signal from any of these three jam detection mechanisms, the transport motor 260 is disabled by the CPU 30. The CPU 30 then sends a signal to the display 63 on the control panel 61 which informs the operator that a jam has been detected (step 402). To access and lift the handles 297 to relieve the pressure applied to the jammed bill by the transport mechanism, the operator must remove the hopper tray 209 (step 403).

The hopper sensor 42 (in Fig. 11) is positioned adjacent the hopper tray 209 and detects whether the hopper tray 209 is in position. If the CPU 30 determines the hopper tray 209 has been removed (step 404), then the display 63 on the control panel 61 instructs the operator to lift the handles 297 and position their engagement surfaces 299a over the drive shaft 221 (step 406). After lifting the handles 297 and attaching them to the feed shaft (step 407), the upper member 280 and lower member 281 are now in the retracted position, and the operator can begin the process of removing the jammed bill from the transport path.

If an automatic separation technique is utilized, such the solenoids 300, 302 described above in connection with Fig. 8, then steps 403-407 are obviated.

The operator uses the keys on the control panel 61 to activate the transport mechanism and remove the jammed bill. If the operator chooses the forward key 267 (step 408), the machines starts the stacker motor 216 since the bill will be expelled near the output receptacle by the stacker wheels 212, 213 (step 410). The transport motor 260 driving the transport mechanism is then run at full forward speed for 0.25 second (step 412) to remove the jammed bill and then for an additional 1.25 seconds at half forward speed (step 414). The stacker motor 216 and the transport motor 260 are then stopped (step 416) and the operator removes the formerly jammed bill from the output receptacle (step 418).

The operator can also choose the reverse key 267 on the control panel 61 when attempting to remove a jammed bill (step 420). Because the reverse mode will not result in the bill being expelled from the output receptacle, there is no need to activate the stacker motor 216. The transport motor 260 driving the transport mechanism is then run at full reverse speed for 0.25 second (step 422) and then at half speed reverse for an additional 1.25 seconds to remove the jammed bill to the input receptacle. The transport motor 260 is then stopped (step 426) and the operator removes the formerly jammed bill from the input receptacle (step 428). The operator can continuously alternate between the reverse key 67 and the forward key 68 until the jammed bill is successfully removed.

Once the formerly jammed bill is retrieved, the operator then grasps the handles 297 and returns the upper member 280 to its operational position (step 430). The machine may also have a sensor which detects whether the upper member 280 is in the retracted position. For example, a switch which is activated only when the upper member 280 is in the retracted position may be employed. Alternatively, the amount of light received by the density photodetectors 293, 294 depends on their distance from the light source. Thus, the retracted position can be distinguished from the operational position by the density photodetectors 293, 294 assuming the jammed bill is cleared. Thus, the CPU 30 can then prompt the operator to perform the next steps in the procedure based on whether the upper member 280 is in the operational or retracted position.

The operator returns the hopper tray 209 to its normal position (step 432) and selects a continue key 65 (step 434) on the control panel 61 (shown in Fig. 12). The machine then checks the density photodetectors 293, 294 and the currency denomination photodetectors 26a and 26b to ensure that the jam has been completely cleared (step 436). If the machine still detects the presence of a jammed bill, then the machine performs the entire clearance process again.

If no bill is detected, then the display 63 returns to its normal counting mode (step 438) and all totals are reset to the recorded amount prior to the processing of the initial bill in the stack of bills which produced the jam (step 440). The operator then gathers all bills in the stack which produced the jam from the output receptacle and the input receptacle including the jammed bills, and returns them as a stack to the input receptacle to be recounted and rediscriminated (step 441). The stacker motor 216 and the transport motor 260 are then started (step 442) and the CPU 30 begins to run the main programming loop (step 444). Currency bills in the input receptacle will now be transported by the transport mechanism and undergo the scanning process.

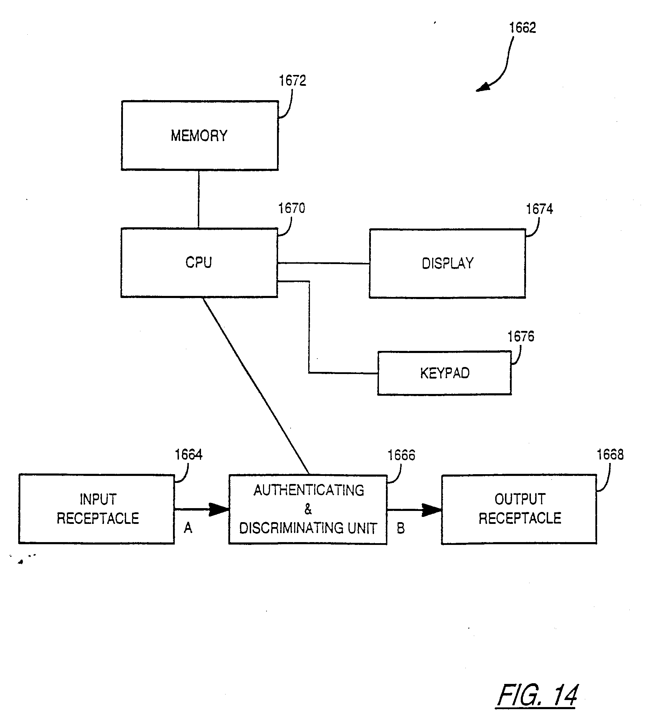

Fig. 14 is a functional block diagram illustrating another embodiment of a currency discriminator system 1662 according to the present invention. The discriminator system 1662 comprises an input receptacle 1664 for receiving a stack of currency bills. A transport mechanism defining a transport path (as represented by arrows A and B) transports the bills in the input receptacle past one or more sensors of an authenticating and discriminating unit 1666 to an output receptacle 1668 where the bills are re-stacked such that each bill is stacked on top of or behind the previous bill so that the most recent bill is the top-most or rear-most bill. The authenticating and discriminating unit scars and determines the denomination of each passing bill. Any variety of discriminating techniques may be used. For example, the discriminating method disclosed in U.S. Pat. No. 5,295,196 (incorporated herein in its entirety) may be employed to optically scan each bill. Depending on the characteristics of the discriminating unit employed, the discriminator may be able to recognize bills only if fed face up or face down, regardless of whether fed face up or face down, only if fed in a forward orientation or reverse orientation, regardless of whether fed in a forward or reverse orientation, or some combination thereof. Additionally, the discriminating unit may be able to scan only one side or both sides of a bill. In addition to determining the denomination of each scanned bill, the authenticating and discriminating unit 1666 may additionally include various authenticating tests such as an ultraviolet authentication test as disclosed in PCT patent application Serial No. PCT/US95/02992.

Signals from the authenticating and discriminating unit 1666 are sent to a signal processor such as a central processor unit ("CPU") 1670. The CPU 1670 records of results of the authenticating and discriminating tests in a memory 1672. When the authenticating and discriminating unit 1666 is able to confirm the genuineness and denomination of a bill, the value of the bill is added to a total value counter in memory 1672 that keeps track of the total value of the stack of bills that were inserted in the input receptacle 1664 and scanned by the authenticating and discriminating unit 1666. Additionally, depending on the mode of operation of the discriminator system 1662, counters associated with one or more denominations are maintained in the memory 1672. For example, a $1 counter may be maintained to record how many $1 bills were scanned by the authenticating and discriminating unit 1666. Likewise, a $5 counter may be maintained to record how many $5 bills were scanned, and so on. In an operating mode where individual denomination counters are maintained, the total value of the scanned bills may be determined without maintaining a separate total value counter. The total value of the scanned bills and/or the number of each individual denomination may be displayed on a display 1674 such as a monitor or LCD display.

As discussed above, a discriminating unit such as the authenticating and discriminating unit 1666 may not be able to identify the denomination of one or more bills in the stack of bills loaded into the input receptacle 1664. For example, if a bill is excessively worn or soiled or if the bill is torn a discriminating unit may not be able to identify the bill. Furthermore, some known discrimination methods do not have a high discrimination efficiency and thus are unable to identify bills which vary even somewhat from an "ideal" bill condition or which are even somewhat displaced by the transport mechanism relative to the scanning mechanism used to discriminate bills. Accordingly, such poorer performing discriminating units may yield a relatively large number of bills which are not identified. Alternatively, some discriminating units may be capable of identifying bills only when they are fed in a predetermined manner. For example, some discriminators may require a bill to be faced in a predetermined manner. Accordingly, when a bill is fed face down past a discriminating unit which can only identify bills fed face up, the discriminating unit can not identify the bill. Likewise, other discriminators require a specific edge of a bill to be fed rust, for example, the top edge of a bill. Accordingly, bills which are not fed in the forward direction, that is, those that are fed in the reverse direction, are not identified by such a discriminating unit.

According to one embodiment, the discriminator system 1662 is designed so that when the authenticating and discriminating unit is unable to identify a bill, the transport mechanism is stopped so that the unidentified bill is the last bill transported to the output receptacle. After the transport mechanism stops, the unidentified bill is then, for example, positioned at the top of or at the rear of the stack of bills in the output receptacle 1668. The output receptacle 1668 is preferably positioned within the discriminator system 1662 so that the operator may conveniently see the flagged bill and/or remove it for closer inspection. Accordingly, the operator is able to easily see the bill which has not been identified by the authenticating and discriminating unit 1666. The operator may then either visually inspect the flagged bill while it is resting on the top of or at the rear of the stack, or alternatively, the operator may chose to remove the bill from the output receptacle in order to examine the flagged bill more closely. The discriminator system 1662 may be designed to continue operation automatically when a flagged bill is removed from the output receptacle or, according to one embodiment of the present invention, may be designed to require a selection element to be depressed. Upon examination of a flagged bill by the operator, it may be found that the flagged bill is genuine even though is was not identified by the discriminating unit. However, because the bill was not identified, the total value and/or denomination counters in the memory 1672 will not reflect its value. According to one embodiment, such an unidentified bill is removed from the output stack and either re-fed through the discriminator or set aside. In the latter case, any genuine set aside bills are counted by hand.

In some discriminators, unidentified bills are routed to a separate reject receptacle. In prior such systems, an unidentified genuine bill would have to be removed from a reject receptacle and re-fed through the discriminator or the stack of rejected bills would have to be counted by hand and the results separately recorded. Furthermore, because re-fed bills have gone unidentified once, they are more likely to go unidentified again and ultimately may have to be counted by hand. However, as discussed above, such procedures may increase the chance for human error or at least lower the efficiency of the discriminator and the operator.

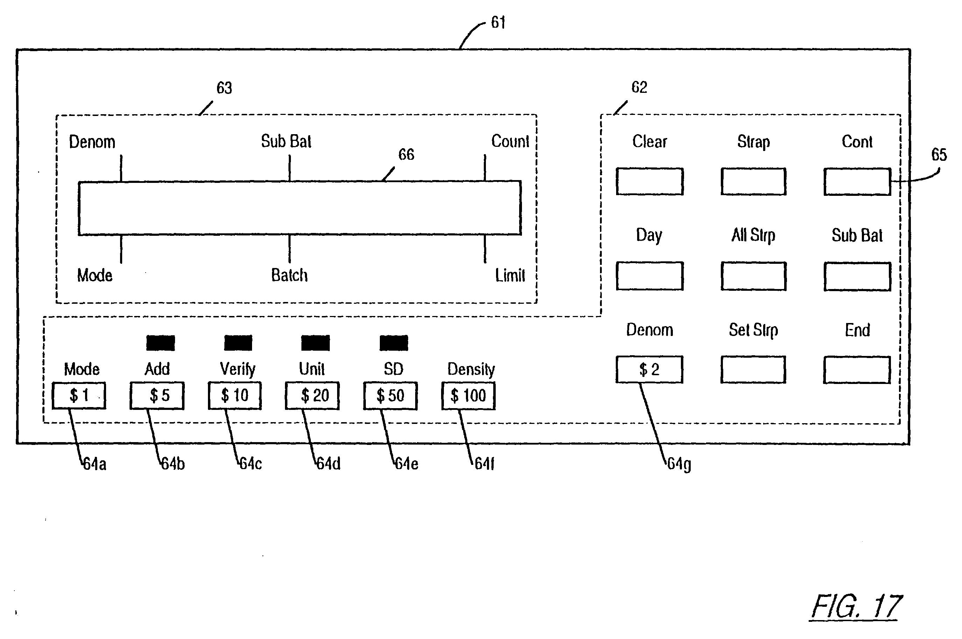

In order to avoid problems associated with re-feeding bills, counting bills by hand, and adding together separate totals, according to one embodiment of the present invention a number of selection elements associated with individual denominations are provided. In FIGs. 1 and 14, these selection elements are in the form of keys or buttons of a keypad 1676. Other types of selection elements such as switches or displayed keys in a touch-screen environment may be employed. The operation of the selection elements will be described in more detail in connection with Fig. 17 but briefly when an operator determines that a flagged bill is acceptable, the operator may simply depress the selection element associated with the denomination of the flagged bill and the corresponding denomination counter and/or the total value counter are appropriately incremented and the discriminator system 1662 or 10 resumes operating again. As discussed above, a bill may be flagged for any number of reasons including the bill being a no call or suspect bill. In non-automatic restart discriminators, where an operator has removed a genuine flagged bill from the output receptacle for closer examination, the bill is first replaced into the output receptacle before a corresponding selection element is chosen. An advantage of the above described procedure is that appropriate counters are incremented and the discriminator is restarted with the touch of a single key, greatly simplifying the operation of the discriminator system 1662 or 10 while reducing the opportunities for human error. When an operator determines that a flagged bill is not acceptable, the operator may remove the unacceptable flagged bill from the output receptacle without replacement and depress a continuation key on the keypad 1676 or 62. When the continuation key is selected the denomination counters and the total value counter are not affected and the discriminator system 1662 or 10 will resume operating again. In automatic restart discriminators, the removal of a bill from the output receptacle is treated as an indication that the bill is unacceptable and the discriminator automatically resumes operation without affecting the denomination counters and/or total value counters.

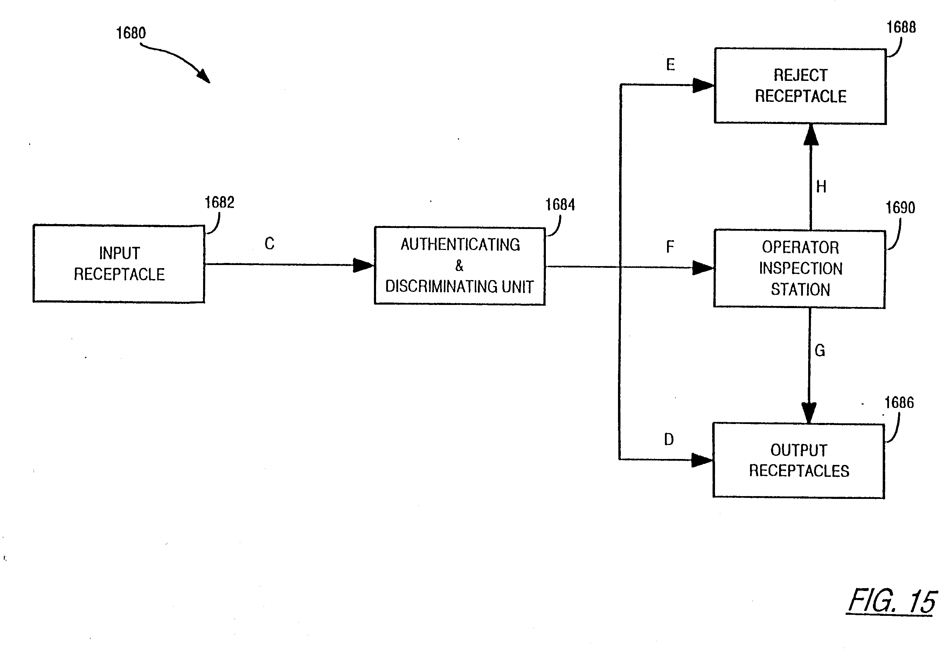

Turning now to Fig. 15, there is shown a functional block diagram illustrating another embodiment of a document authenticator and discriminator according to the present invention. The discriminator system 1680 comprises an input receptacle 1682 for receiving a stack of currency bills. A transport mechanism defining a transport path (as represented by arrow C) transports the bills in the input receptacle, one at a time, past one or more sensors of an authenticating and discriminating unit 1684. Based on the results of the authenticating and discriminating unit 1684, a bill is either transported to one of a plurality of output receptacles 1686 (arrow D), to a reject receptacle 1688 (arrow E), or to an operator inspection station 1690 (arrow F). When is bill is determined to be genuine and its denomination has been identified, the bill is transported to one of a plurality of output receptacles. For example, the discriminator system 1680 may comprise seven output receptacles 1686, one associated with each of seven U.S. denominations, i.e., $1, $2, $5, $10, $20, $50, and $100. The transport mechanism directs (arrow D) the identified bill to the corresponding output receptacle. Alternatively, where the authenticating and discriminating unit determines that a bill is a fake, the bill is immediately routed (arrow E) to the reject receptacle 1688. Finally, if a bill is not determined to be fake but for some reason the authenticating and discriminating unit 1684 is not able to identify the denomination of the bill, the flagged bill is routed (arrow F) to an inspection station and the discriminator system 1680 stops operating. The inspection station is preferably positioned within the discriminator system 1680 so that the operator may conveniently see the flagged bill and/or remove it for closer inspection. If the operator determines that the bill is acceptable, the operator returns the bill to the inspection station if it was removed and selects a selection element (not shown) corresponding to the denomination of the flagged bill. Appropriate counters (not shown) are incremented, the discriminator system 1680 resumes operation, and the flagged bill is routed (arrow G) to the output receptacle associated with the chosen selection element. On the other hand, if the operator determines that the flagged bill is unacceptable, the operator returns the bill to the inspection station if it was removed and selects a continuation element (not shown). The discriminator system 1680 resumes operation, and the flagged bill is routed (arrow H) to the reject receptacle 1688 without incrementing the counters associated with the various denomination and/or the total value counters. Alternatively, the discriminator system 1680 may permit the operator to place any unacceptable unidentified bills aside or into the reject receptacle by hand. While transport paths D and G and paths E and H are illustrated as separate paths, paths D and G and paths E and H, respectively, may be the same path so that all bills proceeding to either one of the output receptacles 1686 or the reject receptacle 1688, respectively, are routed through the inspection station 1690.

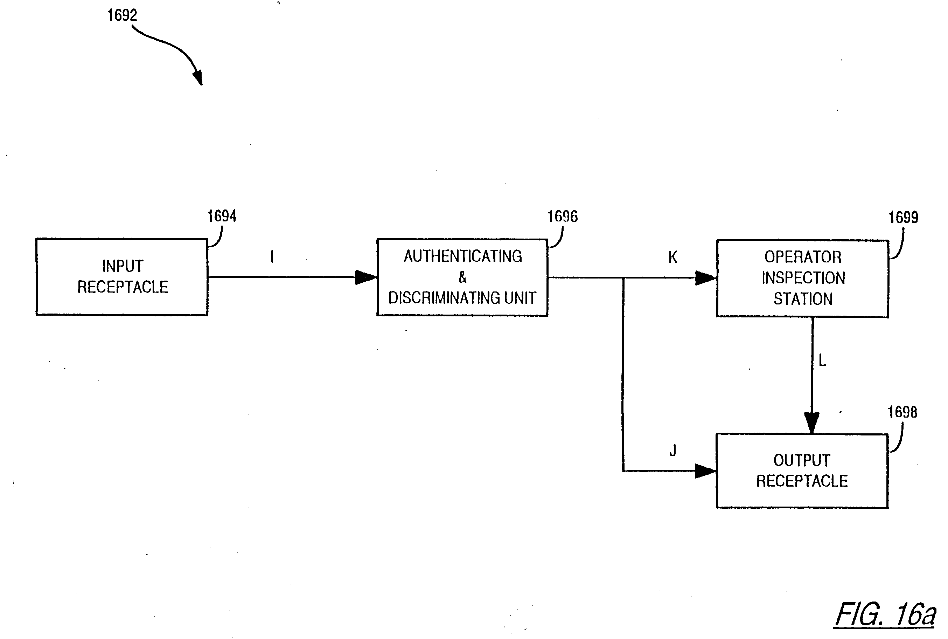

Turning now to Fig. 16a, there is shown a functional block diagram illustrating another embodiment of a document authenticator and discriminator according to the present invention. The discriminator system 1692 comprises an input receptacle 1694 for receiving a stack of currency bills. A transport mechanism (as represented by arrow I) transports the bills in the input receptacle, one at a time, past one or more sensors of an authenticating and discriminating unit 1696. Based on the results of the authenticating and discriminating unit 1684, a bill is either transported to a single output receptacle 1698 (arrow J) or to an operator inspection station 1699 (arrow K). When is bill is determined to be genuine and its denomination has been identified, the bill is transported to the single output receptacle. Alternatively, where the authenticating and discriminating unit determines that a bill is a fake or for some reason the authenticating and discriminating unit 1684 is not able to identify the denomination of the bill, the flagged bill is routed (arrow K) to an inspection station and the discriminator system 1692 stops operating. The inspection station is preferably positioned within the discriminator system 1692 so that the operator may conveniently see the flagged bill and/or remove it for closer inspection. Where a bill has been positively determined to be a fake by the authenticating and discriminating unit 1696, an appropriate indication, for example, via a message in a display or the illumination of a light, can be given to the operator as to the lack of genuineness of the bill. The operator may then remove the bill without replacement from the inspection station 1699 and select a continuation element. Where a bill has not been positively identified as a fake nor has had its denomination identified and where the operator determines that the bill is acceptable, the operator returns the bill to the inspection station if it was removed and selects a selection element (not shown) corresponding to the denomination of the flagged bill. Appropriate counters (not shown) are incremented, the discriminator system 1692 resumes operation, and the flagged bill is routed (arrow L) to the single output receptacle 1698. On the other hand, if the operator determines that the flagged bill is unacceptable, the operator removes the bill without replacement form the inspection station and selects a continuation element (not shown). The discriminator system 1692 resumes operation without incrementing the counters associated with the various denomination and/or the total value counters. While transport paths J and L are illustrated as separate paths, they may be the same path so that all bills proceeding to the single output receptacle 1698 are routed through the inspection station 1699.

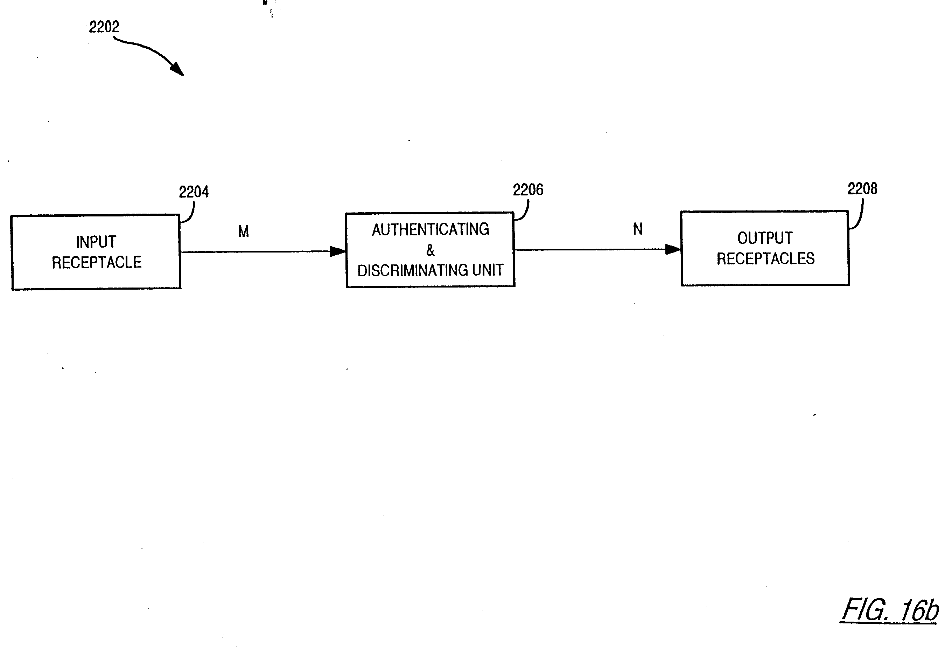

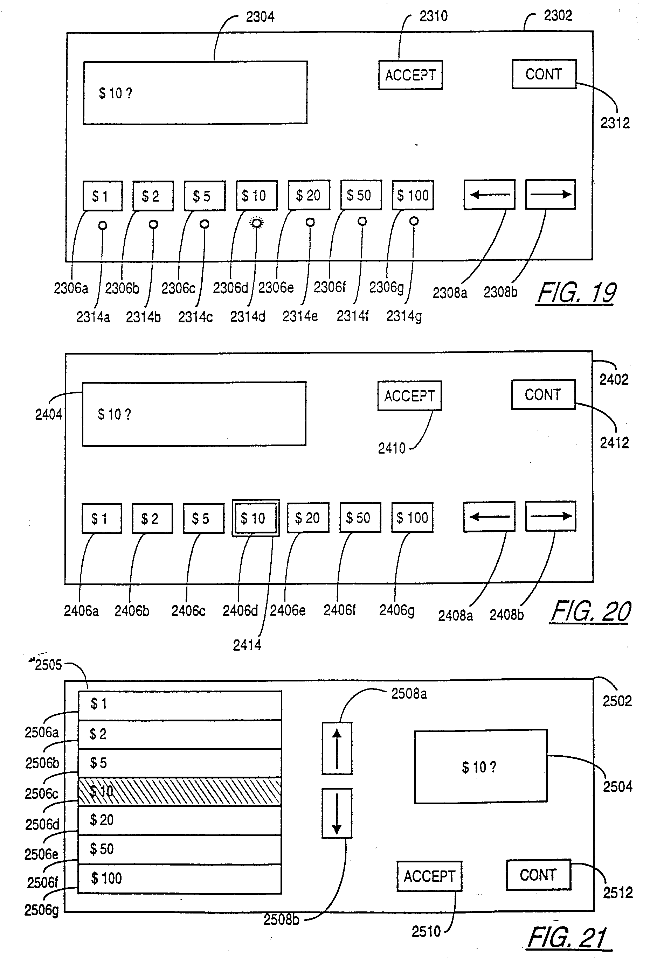

Turning now to Fig. 16b, there is shown a functional block diagram illustrating another embodiment of a document authenticator and discriminator according to the present invention. The discriminator system 2202 comprises an input receptacle 2204 for receiving a stack of currency bills. A transport mechanism defining a transport path (as represented by arrow M) transports the bills in the input receptacle, one at a time, past one or more sensors of an authenticating and discriminating unit 2206. Bills are then transported to one of a plurality of output receptacles 2208 (arrow N). In one embodiment, where the authenticating and discriminating unit determines that a bill is a fake, the flagged bill is routed to a separate one of said output receptacles. The operation of the discriminator may or may not then be suspended. When a bill is not determined to be fake but for some reason the authenticating and discriminating unit 1684 is not able to identify the denomination of the bill, the no call bill may be transported one of the output receptacles. In one embodiment, no call bills are transported to a separate one of the output receptacles. In another embodiment, no calls are not delivered to a special separate output receptacle. The operation of the discriminator may or may not then be suspended. For example, in a two output pocket discriminator, all bills may be transported to the same output receptacle regardless of whether they are determined to be suspect, no call, or properly identified. In this example, the operation of the discriminator may be suspended and an appropriate message displayed when a suspect or no call bill is encountered. Alternatively, suspect bills may be delivered to one of the output receptacles (i.e., a reject receptacle) and no calls and identified bills may be sent to the other output receptacle. In this example, the operation of the discriminator need not be suspended when a suspect bill is encountered but may be suspended when a no call bill is encountered. If the operation is suspended at the time the no call bill is detected and the operator determines that the no call bill is acceptable, the operator returns the bill to the output receptacle from which it was removed (if it was removed) and selects a selection element (not shown) corresponding to the denomination of the flagged bill. Appropriate counters (not shown) are incremented, the discriminator system 2202 resumes operation. On the other hand, if the operator determines that the flagged bill is unacceptable, the operator removes the bill without replacement form the output receptacle and selects a continuation element (not shown). The discriminator system 2202 resumes operation without incrementing the counters associated with the various denomination and/or the total value counters. In another embodiment, no call bills are delivered to an output receptacle separate from the one or more output receptacles receiving identified bills. The operation of the discriminator need not be suspended until all the bills placed in the input receptacle have been processed. The value of any no call bills may then be added to the appropriate counters after the stack of bills has been processed through a reconciliation process. The entering of the value of no call bills is discussed in more detail below in connection with FIGs. 19-24.

The operation of the selection elements according to one embodiment will now be described in more detail in conjunction with Fig. 17 which is a front view of a control panel 61 of one embodiment of the present invention. The control panel 61 comprises a keypad 62 and a display section 63. The keypad 62 comprises a plurality of keys including seven denomination selection elements 64a-64g, each associated with one of seven U.S. currency denominations, i.e., $1, $2, $5, $10, $20, $50, and $100. For foreign bill discriminators, the denomination selection elements may be labeled according to the currency system which a discriminator is designed to handle and accordingly, there may be more or less than seven denomination selection elements. The $1 denomination selection key 64a also serves as a mode selection key. The keypad 62 also comprises a "Continuation" selection element 65. Various information such as instructions, mode selection information, authentication and discrimination information, individual denomination counter values, and total batch counter value are communicated to the operator via an LCD 66 in the display section 63. A discriminator according to one embodiment of the present invention has a number of operating modes including a mixed mode, a stranger mode, a sort mode, a face mode, and a forward/reverse orientation mode. The operation of a discriminator having the denomination selection elements 64a-64g and the continuation element 65 will now be discussed in connection with several operating modes.

### (A) Mixed Mode

Mixed mode is designed to accept a stack of bills of mixed denomination, total the aggregate value of all the bills in the stack and display the aggregate value in the display 63. Information regarding the number of bills of each individual denomination in a stack may also be stored in denomination counters. When an otherwise acceptable bill remains unidentified after passing through the authenticating and discriminating unit, operation of the discriminator may be resumed and the corresponding denomination counter and/or the aggregate value counter may be appropriately incremented by selecting the denomination selection key 64a-64g associated with the denomination of the unidentified bill. For example, if the discriminator system 62 of Fig. 14 or 10 of FIG. 1 stops operation with an otherwise acceptable $5 bill being the last bill deposited in the output receptacle, the operator may simply select key 64b. When key 64b is depressed, the operation of the discriminator is resumed and the $5 denomination counter is incremented and/or the aggregate value counter is incremented by $5. Furthermore, in the discriminator systems 1680 of Fig. 15 and 1692 of Fig. 16, the flagged bill may be routed from the inspection station to an appropriate output receptacle. Otherwise, if the operator determines the flagged bill is unacceptable, the bill may be removed from the output receptacle of FIGs. 1 or 14 or the inspection station of FIGs. 15 and 16a (or in the system 1680 of Fig. 15, the flagged bill may be routed to the reject receptacle 1688). The continuation key 65 is depressed after the unacceptable bill is removed, and the discriminator resumes operation without affecting the total value counter and/or the individual denomination counters.

### (B) Stranger Mode

Stranger mode is designed to accommodate a stack of bills all having the same denomination, such as a stack of $10 bills. In such a mode, when a stack of bills is processed by the discriminator the denomination of the first bill in the stack is determined and subsequent bills are flagged if they are not of the same denomination. Alternatively, the discriminator may be designed to permit the operator to designate the denomination against which bills will be evaluated with those of a different denomination being flagged. Assuming the first bill in a stack determines the relevant denomination and assuming the first bill is a $10 bill, then provided all the bills in the stack are $10 bills, the display 63 will indicate the aggregate value of the bills in the stack and/or the number of $10 bills in the stack. However, if a bill having a denomination other than $10 is included in the stack, the discriminator will stop operating with the non-$10 bill or "stranger bill" being the last bill deposited in the output receptacle in the case of the discriminator system 62 of Fig. 14 or 10 of FIG. 1 (or the inspection station of FIGs. 15 and 16a). The stranger bill may then be removed from the output receptacle and the discriminator is started again either automatically or by depression of the "Continuation" key 65 depending on the set up of the discriminator system. An unidentified but otherwise acceptable $10 bill may be handled in a manner similar to that described above in connection with the mixed mode, e.g., by depressing the $10 denomination selection element 64c, or alternatively, the unidentified but otherwise acceptable $10 bill may be removed from the output receptacle and placed into the input hopper to be re-scanned. Upon the completion of processing the entire stack, the display 63 will indicate the aggregate value of the $10 bills in the stack and/or the number of $10 bills in the stack. All bills having a denomination other than $10 will have been set aside and will not be included in the totals. Alternatively, these stranger bills can be included in the totals via operator selection choices. For example, if a $5 stranger bill is detected and flagged in a stack of $10 bills, the operator may be prompted via the display as to whether the $5 bill should be incorporated into the running totals. If the operator responds positively, the $5 bill is incorporated into appropriate running totals, otherwise it is not. Alternatively, when the discriminator stops on a stranger bill, such as a $5, the operator may depress the denomination selection element associated with that denomination to cause the value of the stranger bill to be incorporated into the totals. Likewise for other types of flagged bills such as no calls. Alternatively, a set-up selection may be chosen whereby all stranger bills are automatically incorporated into appropriate running totals.

### (C) Sort Mode

According to one embodiment, the sort mode is designed to accommodate a stack of bills wherein the bills are separated by denomination. For example, all the $1 bills may be placed at the beginning of the stack, followed by all the $5 bills, followed by all the $10 bills, etc. Alternatively, the sort mode may be used in conjunction with a stack of bills wherein the bills are mixed by denomination. The operation of the sort mode is similar to that of the stranger mode except that after stopping upon the detection of a different denomination bill, the discriminator is designed to resume operation upon removal of all bills from the output receptacle. Returning to the above example, assuming the rust bill in a stack determines the relevant denomination and assuming the first bill is a $1 bill, then the discriminator processes the bills in the stack until the first non-$1 bill is detected, which in this example is the first $5 bill. At that point, the discriminator will stop operating with the first $5 being the last bill deposited in the output receptacle. The display 63 may be designed to indicate the aggregate value of the preceding $1 bills processed and/or the number of preceding $1 bills. The scanned $1 bills and the first $5 bill are removed from the output receptacle and placed in separate $1 and $5 bill stacks. The discriminator will start again automatically and subsequent bills will be assessed relative to being $5 bills. The discriminator continues processing bills until the first $10 bill is encountered. The above procedure is repeated and the discriminator resumes operation until encountering the first bill which is not a $10 bill, and so on. Upon the completion of processing the entire stack, the display 63 will indicate the aggregate value of all the bills in the stack and/or the number of bills of each denomination in the stack. This mode permits the operator to separate a stack of bills having multiple denominations into separate stacks according to denomination.

### (D) Face Mode

Face mode is designed to accommodate a stack of bills all faced in the same direction, e.g., all placed in the input hopper face up (that is the portrait or black side up for U.S. bills) and to detect any bills facing the opposite direction. In such a mode, when a stack of bills is processed by the discriminator, the face orientation of the first bill in the stack is determined and subsequent bills are flagged if they do not have the same face orientation. Alternatively, the discriminator may be designed to permit designation of the face orientation to which bills will be evaluated with those having a different face orientation being flagged. Assuming the first bill in a stack determines the relevant face orientation and assuming the first bill is face up, then provided all the bills in the stack are face up, the display 63 will indicate the aggregate value of the bills in the stack and/or the number of bills of each denomination in the stack. However, if a bill faced in the opposite direction (i.e., face down in this example) is included in the stack, the discriminator will stop operating with the reverse-faced bill being the last bill deposited in the output receptacle. The reverse-faced bill then may be removed from the output receptacle. In automatic re-start embodiments, the removal of the reverse-faced bill causes the discriminator to continue operating. The removed bill may then be placed into the input receptacle with the proper face orientation. Alternatively, in non-automatic re-start embodiments, the reverse-faced bill may be either placed into the input receptacle with the proper face orientation and the continuation key 65 depressed, or placed back into the output receptacle with the proper face orientation. Depending on the set up of the discriminator when a bill is placed back into the output receptacle with the proper face orientation, the denomination selection key associated with the reverse-faced bill may be selected, whereby the associated denomination counter and/or aggregate value counter are appropriately incremented and the discriminator resumes operation. Alternatively, in embodiments wherein the discriminator is capable of determining denomination regardless of face orientation, the continuation key 65 or a third key may be depressed whereby the discriminator resumes operation and the appropriate denomination counter and/or total value counter is incremented in accordance with the denomination identified by the discriminating unit. In discriminators that require a specific face orientation, any reverse-faced bills will be unidentified bills. In discriminators that can accept a bill regardless of face orientation, reverse-faced bills may be properly identified. The later type of discriminator may have a discriminating unit with a scanhead on each side of the transport path. Examples of such dual-sided discriminators are disclosed above (see e.g., FIGs. 2, 5, and 6. The ability to detect and correct for reverse-faced bills is important as the Federal Reserve requires currency it receives to be faced in the same direction.

In a multi-output receptacle discriminator, the face mode may be used to route all bills facing upward to one output receptacle and all bills facing downward to another output receptacle. In single-sided discriminators, reverse-faced bills may be routed to an inspection station such as 1690 of Fig. 15 for manual turnover by the operator and the unidentified reverse-faced bills may then be passed by the discriminator again. In dual-sided discriminators, identified reverse-faced bills may be routed directly to an appropriate output receptacle. For example, in dual-sided discriminators bills may be sorted both by face orientation and by denomination, e.g., face up $1 bills into pocket #1, face down $1 bills into pocket #2, face up $5 bills into pocket #3, and so on or simply by denomination, regardless of face orientation, e.g., all $1 bills into pocket #1 regardless of face orientation, all $2 bills into pocket #2, etc.

### (E) Forward/Reverse Orientation Mode

Forward/Reverse Orientation mode ("Orientation" mode) is designed to accommodate a stack of bills all oriented in a predetermined forward or reverse orientation direction. For example in a discriminator that feeds bills along their narrow dimension, the forward direction may be defined as the fed direction whereby the top edge of a bill is fed first and conversely for the reverse direction. In a discriminator that feeds bills along their long dimension, the forward direction may be defined as the fed direction whereby the left edge of a bill is fed first and conversely for the reverse direction. In such a mode, when a stack of bills is processed by the discriminator, the forward/reverse orientation of the first bill in the stack is determined and subsequent bills are flagged if they do not have the same forward/reverse orientation. Alternatively, the discriminator may be designed to permit the operator to designate the forward/reverse orientation against which bills will be evaluated with those having a different forward/reverse orientation being flagged. Assuming the first bill in a stack determines the relevant forward/reverse orientation and assuming the first bill is fed in the forward direction, then provided all the bills in the stack are also fed in the forward direction, the display 63 will indicate the aggregate value of the bills in the stack and/or the number of bills of each denomination in the stack. However, if a bill having the opposite forward/reverse orientation is included in the stack, the discriminator will stop operating with the opposite forward/reverse oriented bill being the last bill deposited in the output receptacle. The opposite forward/reverse oriented bill then may be removed from the output receptacle. In automatic re-start embodiments, the removal of the opposite forward/reverse oriented bill causes the discriminator to continue operating. The removed bill may then be placed into the input receptacle with the proper face orientation. Alternatively, in non-automatic re-start embodiments, the opposite forward/reverse oriented bill may be either placed into the input receptacle with the proper forward/reverse orientation and the continuation key 65 depressed, or placed back into the output receptacle with the proper forward/reverse orientation. Depending on the set up of the discriminator when a bill is placed back into the output receptacle with the proper forward/reverse orientation, the denomination selection key associated with the opposite forward/reverse oriented bill may be selected, whereby the associated denomination counter and/or aggregate value counter are appropriately incremented and the discriminator resumes operation. Alternatively, in embodiments wherein the discriminator is capable of determining denomination regardless of forward/reverse orientation, the continuation key 65 or a the third key may be depressed whereby the discriminator resumes operation and the appropriate denomination counter and/or total value counter is incremented in accordance with the denomination identified by the discriminating unit. In single-direction discriminators, any reverse-oriented bills will be unidentified bills. In dual-direction discriminators, reverse-oriented bills may be properly identified by the discriminating unit. An example of a dual-direction discriminating system is described above connection with FIGs. 1-2 and in United States Pat. No. 5,295,196. The ability to detect and correct for reverse-oriented bills is important as the Federal Reserve may soon require currency it receives to be oriented in the same forward/reverse direction.

In a multi-output receptacle discriminator, the orientation mode may be used to route all bills oriented in the forward direction to one output receptacle and all bills oriented in the reverse direction to another output receptacle. In single-direction discriminators, reverse-oriented bills may be routed to an inspection station such as 1690 of Fig. 15 for manual turnover by the operator and the unidentified reverse-oriented bills may then be passed by the discriminator again. In discriminators capable of identifying bills fed in both forward and reverse directions ("dual-direction discriminators"), identified reverse-oriented bills may be routed directly to an appropriate output receptacle. For example, in dual-direction discriminators bills may be sorted both by forward/reverse orientation and by denomination, e.g., forward $1 bills into pocket #1, reverse $1 bills into pocket #2, forward $5 bills into pocket #3, and so on or simply by denomination, regardless of forward/reverse orientation, e.g., all $1 bills into pocket #1 regardless of forward/reverse orientation, all $2 bills into pocket #2, etc.

### (F) Off-Sort Mode

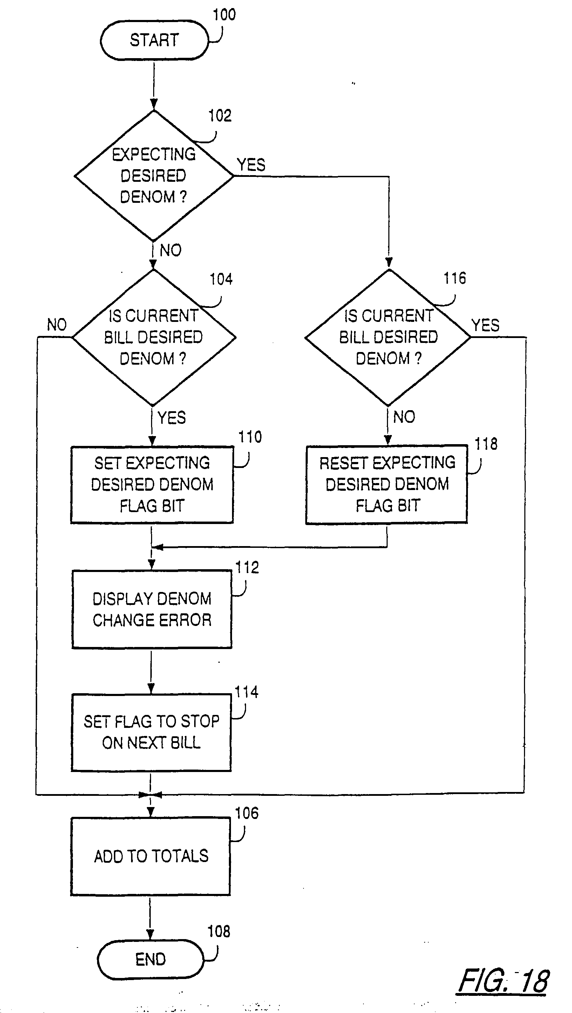

Fig. 18 is a flow chart illustrating the sequential procedure involved in the performing a sorting operation according to an embodiment of the present invention. The operator of a currency discriminating device embodying a sorting method in accordance with the present invention selects a desired denomination to be off-sorted. A stack of currency to be processed is then placed in the input receptacle of the discriminator and the discriminator begins processing the bills. The discriminator determines the denomination of each bill in the stack. A bill whose denomination the discriminator is unable to determine to a requisite degree of certainty is termed a no call bill. The discriminator may also incorporate various authentication means. A bill failing one or more authentication tests is termed a suspect bill.

The procedure of Fig. 18 begins at subroutine step 100 and it is first determined whether the discriminator is expecting the current bill to be a bill having the desired or specified denomination (step 102). If the answer is no, processing proceeds to step 104 where it is determined whether the current bill is a bill of the desired denomination. If the answer is no, the value of the current bill is added to the total (step 106) and the subroutine is ended (step 108). If the answer is yes, the next bill is also expected to be a bill of the desired denomination and accordingly a flag bit is set indicating that the next bill is expected to be a bill of the desired denomination (step 110). Subsequently, a denomination change message is displayed (step 112) and a flag is set causing the discriminator to halt operation with the current bill being the last bill deposited in the output receptacle (step 114). A flag may be set to handle the processing of the first bill in the stack so that the discriminator will not halt if the first bill has the specified denomination. The denomination change message indicates why the discriminator has stopped operating and aids in distinguishing from other reasons why the discriminator may have stopped such as the detection of a no call or suspect bill. According to one embodiment, when the discriminator flags a bill, the bill immediately upstream of the flagged bill is scanned by the discriminator before the discriminator halts and the flagged bill is the last bill output to the output receptacle. The value of the current bill is added to the total (step 106) and the subroutine is ended (step 108).

Returning to step 102, if the current bill is expected to have the desired denomination, i.e., the preceding bill had the desired denomination, the subroutine branches to step 116 where it is determined whether the current bill indeed has the desired denomination. If the current does have the desired denomination, its value is added to the running total (step 106) and the subroutine ended (step 108). If at step 116 the current bill does not have the desired denomination, the expecting the desired denomination flag bit is reset (step 118), a denomination change message is displayed (step 112), and a flag is set causing the discriminator to halt operation with the current bill being the last bill deposited in the output receptacle (step 114). The value of the current bill is added to the total (step 106) and the subroutine is ended (step 108).

For example, assume the desired off-sort denomination is selected to be $20 bills and a stack of bills having the following denominations is inserted into the input receptacle of a discriminator possessing an embodiment of the sorting operating mode according to the present invention: $1, $1, $5, $5, $1, $20, $20, $20, $20, $5, $5, $20, $20, $20. When the stack is placed in the input receptacle or hopper, the discriminating device may automatically start processing the bills or alternatively may require the selection of a start key. The currency discriminator processes the first six bills, discriminates their denomination, totals their values, and halts with the sixth bill, i.e., the first $20 bill, being the last bill in the output receptacle. Depending on the setup of the discriminator, the discriminator may halt after one or more bills upstream of the sixth bill are scanned but before they are output to the output receptacle. The operator then removes all six bills and separates the first five bills into one pile, e.g., pile A, and the sixth bill, namely, the $20 bill, into another pile, e.g., pile B. Depending on the setup of the currency discriminator, the discriminating device may continue to process the remaining bills automatically when the stack of six bills is removed or may continue processing the remaining bills when a continue element is selected. The discriminator then processes the next four bills, discriminates their denomination, adds their values to the running total, and halts with the tenth bill, i.e., the $5 bill, being the last bill output to the output receptacle. The operator may then remove all the bills from the output receptacle, placing the three $20 bills in pile B and the last $5 bill in pile A. The discriminator then processes the next two remaining bills, discriminates their denomination, adds their values to the running total, and halts with the twelfth bill, i.e., the $20 bill, being the last bill output to the output receptacle. The operation then continues to proceed in the manner described above.

In an alternative embodiment, instead of halting the device with the flagged bill being the last bill output to the output receptacle, the device may halt with the flagged bill being at an identifiable location, *e.g.*, the second to last bill output to the output receptacle, and the display may indicate the location of the flagged bill, *e.g.*, "denomination changed with second to the last bill in the output bin."

### Suspect Mode

In addition to the above modes, a suspect mode may be activated in connection with these modes whereby one or more authentication tests may be performed on the bills in a stack. When a bill fails an authentication test, the discriminator will stop with the failing or suspect bill being the last bill transported to the output receptacle. The suspect bill then may be removed from the output receptacle and set aside.

Likewise, one or more of the above described modes may be activated at the same time. For example, the face mode and the forward/reverse orientation mode may be activated at the same time. In such a case, bills that are either reverse-faced or opposite forward/reverse oriented will be flagged.

According to one embodiment, when a bill is flagged, for example, by stopping the transport motor with the flagged bill being the last bill deposited in the output receptacle, the discriminating device indicates to the operator why the bill was flagged. This indication may be accomplished by, for example, lighting an appropriate light, generating an appropriate sound, and/or displaying an appropriate message in the display section 63 (Fig. 17). Such indication might include, for example, "no call", "stranger", "failed magnetic test", "failed UV test", "no security thread", etc.

Means for entering the value of no call bills were discussed above in connection with Fig. 17 and the operating modes discussed above. Now several additional means will be discussed in connection with FIGs. 19-24 Fig. 19 is a front view of a control panel 2302 similar to that of Fig. 17. The control panel 2302 comprises a display area 2304, several denomination selection elements 2306a-g in the form of keys, left and right scroll keys 2308a-b, an accept selection element 2310, and a continuation selection element 2312. Each denomination selection element 2306a-g has a prompting means associated therewith. In Fig. 19, the prompting means are in the form of small lights or lamps 2314a-g such as LEDs. In Fig. 19, the light 2314d associated with the $10 denomination key 2306d is illuminated so as to prompt the operator that a denomination of $10 is being suggested. Alternatively, instead of the lamps 2314a-g being separate from the denomination keys 2306a-g, the denomination keys could be in the form of illuminable keys whereby one of the keys 2306a-g would light up to suggest its corresponding denomination to the operator. In place of, or in addition to, the illuminable lights 2314a-g or keys, the display area 2304 may contain a message to prompt or suggest a denomination to the operator. In Fig. 19, the display area 2304 contains the message "$10?" to suggest the denomination of $10. In the embodiment of Fig. 17, the display area 63 may be used to suggest a denomination to the operator without the need of illuminable lights and keys.

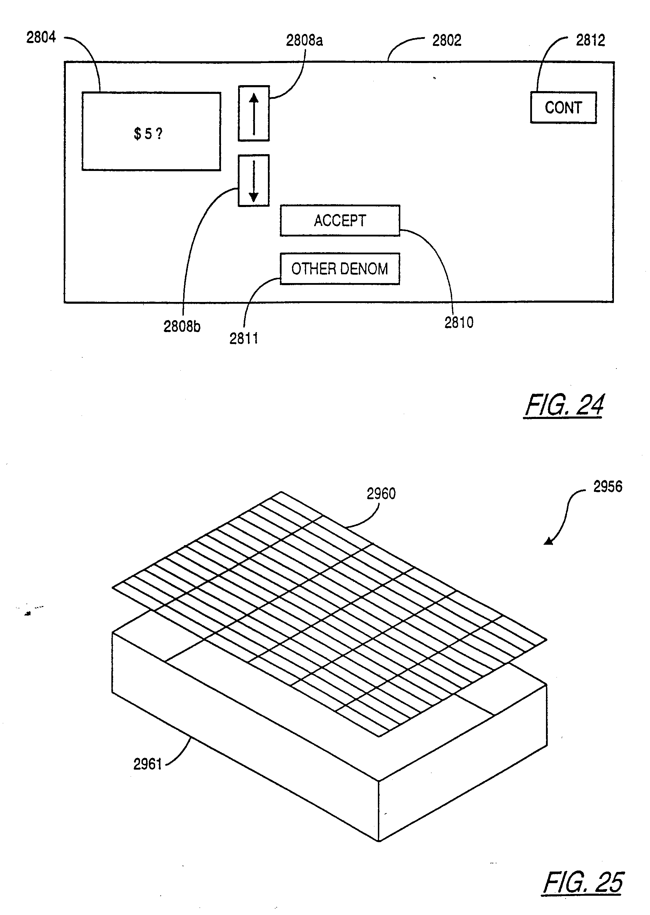

The control panel 2402 of Fig. 20 is similar to the control panel 2302 of Fig. 19; however, the denomination selection elements 2406a-g, scroll keys 2408a-b, accept key 2410, and continuation key 2412 are displayed keys in a touch-screen environment. To select any given key, the operator touches the screen in the area of the key to be selected. The operation of a touch screen is described in more detail in connection with Fig. 25. The discriminator may contain prompting means to suggest a denomination to the operator. For example, an appropriate message may be displayed in a display area 2404. Alternatively, or additionally, the prompting means may include means for highlighting one of the denomination selection elements 2406a-g. For example, the appearance of one of the denomination selection elements may be altered such as by making it lighter or darker than the remaining denomination selection elements or reversing the video display (e.g., making light portions dark and making the dark portions light or swapping the background and foreground colors). Alternatively, a designated denomination selection element may be highlighted by surrounding it with a box, such as box 2414 surrounding the $10 key 2406d.

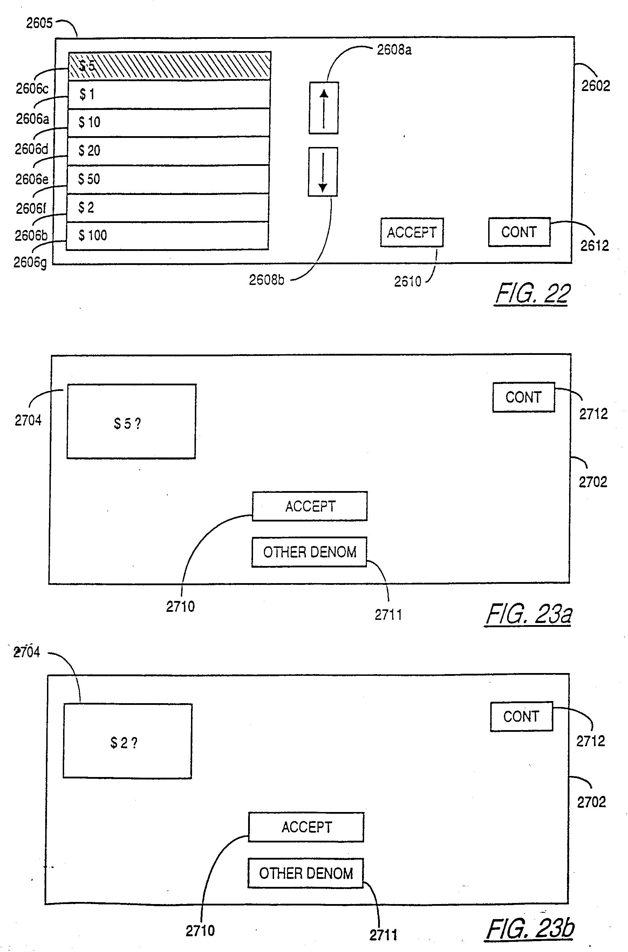

Another embodiment of a control panel 2502 is depicted in Fig. 21. The control panel 2502 has several denomination indicating elements 2506a-g in the form of menu list 2505, scroll keys 2508a-b, an accept selection element 2510, and a continuation selection element 2512. The various selection elements may be, for example, physical keys or displayed keys in a touch screen environment. For example, the menu list 2505 may be displayed in a non-touch screen activated display area while the scroll keys 2508a-b, accept key 2510, and continuation key 2512 may be physical keys or displayed touch screen keys. In such an environment a user may accept a denominational selection by pressing the accept key 2510 when the desired denomination indicating element is highlighted and may use the scroll keys 2508a-b to vary the denomination indicating element that is highlighted. Alternatively, the denomination indicating elements 2506a-g may themselves be selection elements such as by being displayed touch screen active keys. In such an embodiment a given denomination element may be made to be highlighted and/or selected by touching the screen in the area of one of the denomination selection elements 2506a-g. The touching of the screen in the area of one of the denomination selection elements may simply cause the associated denomination selection element to become highlighted requiring the touching and/or pressing of the accept key 2510 or alternatively may constitute acceptance of the associated denomination selection element without requiring the separate selection of the accept key 2510. The discriminator may contain prompting means to suggest a denomination to the operator. For example, an appropriate message may be displayed in a display area 2504. Alternatively, or additionally, the prompting means may include means for highlighting one of the denomination indicating elements 2506a-g. For example, the appearance of one of the denomination indicating elements may be altered such as by making it lighter or darker than the remaining denomination indicating elements or by reversing the video display (e.g., making light portions dark and making the dark portions light or swapping the background and foreground colors). In Fig. 21, the hash marks are used to symbolize the alternating of the display of the $10 denomination indicating element 2506d relative to the other denomination indicating elements such as by using a reverse video display.

Control panel 2602 of Fig. 22 is similar to control panel 2502 of Fig. 21; however, the control panel 2602 does not have a separate display area. Additionally, the order of the denomination indicating elements 2606a-g of menu list 2605 is varied relative to those of menu list 2505. The order of the denomination selection element may be user-defined (i.e., the operator may preset the order in which the denominations should be listed) or may be determined by the discriminator and be, for example, based on the historical occurrence of no calls of each denomination, based on the denomination of the most recently detected no call, based on calculated correlation values for a given no call bill, or perhaps based on random selection. Such criteria will be described in more detail below.

The control panel 2702 of FIGs. 23a and 23b comprises a display area 2704, an accept key 2710, a next or other denomination key 2711, and a continuation key 2712. Alternatively, the accept key may be designated a "YES" key while the other denomination key may be designated a "NO" key. These keys may be physical keys or displayed keys. The discriminator prompts or suggest a denomination by displaying an appropriate message in the display area 2704. If the operator wishes to accept this denomination suggestion, the accept key 2710 may be selected. If other the operator wishes to select a different denomination, the other denomination key 2711 may be selected. If in the example given in FIG. 23a the operator wishes to select a denomination other than the $5 prompted in the display area 2704, the other denomination key 2711 may be selected which results in prompting of a different denomination, e.g., $2 as shown in FIG. 23b. The "OTHER DENOM" key 2711 may be repeatedly selected to scroll through the different denominations.

The control panel 2802 of Fig. 24 is similar to that of FIGs. 23a-b and additionally comprises scroll keys 2808a-b. These scroll keys 2808a-b may be provided in addition to or in place of the other denomination key 2811. The order in which denominations are suggested to an operator, for example, in FIGs. 23 and 24, may be based on a variety of criteria as will be discussed below such as user-defined criteria or order, historical information, previous bill denomination, correlation values, or previous no call information.

Now several embodiments of the operation of discriminators embodying control panels such as those of FIGs. 17 and 19-24 will be discussed. In particular, several methods for reconciling the value of no call bills will be discussed in connection with these control panels. As discussed above, for example, in connection with the several previously described operating modes, when a discriminator encounters a no call bill, that is, when a discriminator is unable to determine or call the denomination of a bill, any counters keeping track of the number or value of each denomination of bills or of the total value of the bills processed will not include the no call bill. Traditionally, any no calls bills had to be set aside and manually counted by hand with the operator being required to add their values to the totals provided by the discriminator. As discussed above, this can lead to errors and reduced efficiency. To counter this problem, according to an embodiment of the present invention, means are provided for incorporating the value of no call bills. In single pocket discriminators, reconciliation may be accomplished on-the-fly with the discriminator suspending operation when each no call is encountered, prompting the operator to enter the value of the no call, and then resuming operation. In multi-output pocket discriminators, no call bills may be reconciled either on-the-fly or after the completion of processing all the bills placed in the input hopper or after completion of processing some other designated batch of bills. Under the first approach, the operation of the discriminator is suspended when each no call bill is detected with or without the no call bill being routed to a special location. The operator is then prompted to enter the value of the no call where upon the discriminator resumes operation. Based on the value indicated by the operator, appropriate counters are augmented. Under the second approach, any no call bills are routed to a special location while the discriminator continues processing subsequent bills. When all the bills have been processed, the operator is prompted to reconcile the values of any intervening no call bills. For example, assume a stack of fifty bills is placed in the input hopper and processed with four no calls being routed to a separate output receptacle from the receptacle or receptacles into which the bills whose denominations have been determined. After all fifty bills have been processed, the operation of the transport mechanism is halted and the operator is prompted to reconcile the value of the four no call bills. The methods for reconciling these four no calls will be discussed below after describing several denomination indicating and/or prompting means and methods. Alternatively, instead of waiting until all the bills in the stack have been processed, the discriminator may prompt the operator to reconcile the value of any no call bills while the remaining bills are still being processed. When the operator indicates the denominations of the no call bills, appropriate counters are augmented to reflect the value of the no call bills.

Several embodiments of means for permitting the operator to indicate the value of a flagged bill such as a no call and/or for prompting the operator as to the value of a flagged bill such as a no call will no w be discussed. A first method was discussed above in connection with several operating modes and in connection with Fig. 17. According to one embodiment, the control panel of Fig. 17 comprises denomination indicating means in the form of the denomination selection elements 64a-g for permitting the operator to indicate the denomination of a bill but does not additionally comprise means for prompting the operator as to the denomination of a particular bill. Under this method, the operator examines a no call bill. If the bill is acceptable, the operator selects the denomination selection element associated with the denomination of the no call bill and the appropriate counters are augmented to reflect the value of the no call bill. For example, if the operator determines a no call bill is an acceptable $10 bill, the operator may press the $10 selection element 64c of Fig. 17. If the operation of the discriminator had been suspended, the selection of a denomination selection causes the operation of the discriminator to resume. In a on-the-fly reconciliating machine (i.e., one that suspends operation upon detection of each no call bill), if the operator determines that a particular no call bill is unacceptable, a continuation selection element may be selected to cause the discriminator to resume operation without negatively affecting the status of any counters. Under this approach, the denomination selection elements provide the operator with means for indicating the value of a no call bill. In FIGs. 19-24, additional examples of means for indicating the value of no call bills are provided. For example, in FIGs. 19-22, according to one embodiment, a denomination may be indicated in a similar manner by pressing one of the denomination selection elements. Alternatively, or additionally, a denomination may be indicated by selecting one of the denomination selection elements and selecting an accept key. Another example of a method of indicating a particular denomination selection element would be by utilizing one or more scroll keys. The selection of a denomination selection element may be indicated by, for example, the lights 2314 of Fig. 19, or by highlighting a particular selection element as in FIGs. 20-22. Alternatively a displayed message, as in FIGs. 19-21, 23, and 24, may be used to indicate which denomination is currently selected. The scroll keys could be used to alter which denomination is presently selected, for example, by altering which light 2314 is illuminated, which selection element is highlighted, or which denomination appears in the displayed message. Selection of an accept key while a particular denomination is selected may be used to indicate the selected denomination to the discriminator.

In addition to means for permitting the operator to indicate the denomination of one or more no calls, a discriminator may be provided with one or more means of prompting the operator as to the denomination of a no call bill. These means can be the means used to indicate which denomination is currently selected, e.g., the lights 2314 of Fig. 19, the highliglighting of FIGs. 20-22, and/or the displayed message of FIGs. 19-21, 23, and 24. Several methods that may be employed in prompting the operator to enter the value of one or more no call bills will now be discussed.

A discriminator containing means for prompting an operator as to the value of a no call bill may base its selection of the denomination to be prompted to the operator on a variety of criteria. According to one embodiment, default denomination or sequence of denominations may be employed to prompt a denomination to an operator. For example, the discriminator may begin by prompting the lowest denomination, e.g., $1. Alternatively, the operator may begin by prompting the operator with the first denomination in a pre-defined sequence or on a menu list. The order of the denominations in the sequence or on the menu list may be a default order, e.g., increasing or decreasing denominational order, user-defined order, manufacturer-defined order.

According to another embodiment, a denomination to be prompted to the operator is determined on a random basis. The discriminator simply randomly or pseudo-randomly chooses one of a plurality of denominations and suggests this denomination to the operator. The denomination prompted to an operator may remain the same for all no call bills or alternatively, a new randomly selected denomination may be chosen for each no call encountered. If the operator agrees that a given no call bill is of the denomination suggested by the prompting means and finds the particular no call bill to be acceptable, the operator may simply choose the accept element or the corresponding denomination selection element depending on the embodiment of the control panel employed. If the operator finds a particular bill to be acceptable but does not have the suggested denomination, the operator may alter the denomination that is selected by, for example, altering the displayed suggested denomination by using the scroll keys, scrolling among the plurality of denomination selection and/or indicating elements, or directly selecting the appropriate denomination by pressing or touching the appropriate denomination selection element. If the operator finds that a no call bill is not acceptable, the operator may simply select a continuation key.

According to another embodiment, a denomination to be prompted to the operator is determined on the basis of the denomination of the last bill that was identified by the discriminator. For example, suppose the tenth bill in a stack was determined by the discriminator to be a $10, the eleventh bill was a no call and indicated by the operator to be a $5 bill, and the twelfth was a no call bill. According to this embodiment, the discriminator would suggest to the operator that the twelfth bill is a $10 bill. The operator may accept this suggestion or alter the suggested denomination as described above.

According to another embodiment, a denomination to be prompted to the operator is determined on the basis of the denomination of the last no call bill as indicated by the operator. For example, suppose the tenth bill was a no call and indicated by the operator to be a $5 bill, the eleventh bill in a stack was determined by the discriminator to be a $10, and the twelfth was a no call bill. According to this embodiment, the discriminator would suggest to the operator that the twelfth bill is a $5 bill. The operator may accept this suggestion or alter the suggested denomination as described above.

According to another embodiment, a denomination to be prompted to the operator is determined on the basis of the denomination of the immediately preceding bill, regardless of whether the denomination of that bill was determined by the discriminator or was indicated by the operator. For example, suppose the tenth bill in a stack was determined by the discriminator to be a $10, the eleventh bill was a no call and indicated by the operator to be a $5 bill, and the twelfth was also a no call bill. According to this embodiment, the discriminator would suggest to the operator that the twelfth bill is a $5 bill. The operator may accept this suggestion or alter the suggested denomination as described above.

According to another embodiment, a denomination to be prompted to the operator is determined on the basis of historical information concerning no call bills such as statistical information regarding previous no call bills. For example, suppose that for a given discriminator 180 no calls had been encountered since the discriminator was placed in service. According to this embodiment, information regarding these no calls is stored in memory. Assume that of these 180 no call bills, 100 were indicated by the operator to be $5s, 50 were $10s, and the remaining 30 were $20s. According to this embodiment, the discriminator would suggest to the operator that a no call bill was a $5. The operator may accept this suggestion or alter the suggested denomination as described above. Variations on the data which constitute the historical basis may be made. For example, the historical basis according to this embodiment may be all no calls encountered since a given machine was place in service as in the above example, the last predetermined number of no calls detected, e.g., the last 100 no calls detected, or the last predetermined number of bills processed, e.g., the no calls encountered in the last 1000 bills processed. Alternatively, the historical basis may be set by the manufacturer based on historical data retrieved from a number of discriminators.

According to another embodiment, a denomination to be prompted to the operator is determined on the basis of a comparison of information retrieved from a given no call bill and master information associated with genuine bills. For example, in some discriminators, the denomination of a bill is determined by scanning the bill, generating a scanned pattern from information retrieved via the scanning step, and comparing the scanned pattern with one or more master patterns associated with one or more genuine bills associated with one or more denominations. If the scanned pattern sufficiently matches one of the master patterns, the denomination of the bill is called or determined to be the denomination associated with the best matching master, pattern. However, in some discriminators, a scanned pattern must meet some threshold degree of matching or correlation before the denomination of a bill will be called. In such discriminators, bills whose scanned pattern does not sufficiently match one of the master patterns are not called, i.e., they are no calls. According to the present embodiment, the discriminator would suggest to the operator that a no call had the denomination associated with the master pattern that most closely matched its scanned pattern even though that match was insufficient to call the denomination of the bill without the concurrence of the operator. The operator may accept this suggestion or alter the suggested denomination as described above. For example, in a discriminator similar to that described in U.S. Pat. No. 5,295,196, the discriminator may prompt the operator with the denomination associated with the master pattern that has the highest correlation with the scanned pattern associated with the given no call bill. Additional examples may be made with reference to FIGs. 3 and 4a-c. For example, with respect to Fig. 3, if the highest correlation for a bill is below 800, the bill is a no call bill. In such a case, assume the highest correlation is 790 and this correlation is associated with a $1 bill. When this no call bill is to be reconciled, the discriminator would suggest to the operator that the no call was a $1 bill.

According to another embodiment, a denomination to be prompted to the operator is determined on the basis of preset criteria established by the manufacturer. For example, in Fig. 21, the denomination indicating elements are arranged in increasing denominational order. The discriminator may be designed to default so that a given one of these denomination selection elements is initially highlighted when no call bills are to be reconciled. For example, for each no call the $10 element 2506d may initially be selected. Alternatively, the discriminator may be designed to default to the first denomination selection element listed, e.g., the $1 denomination element 2506a.

According to another embodiment, a denomination to be prompted to the operator is determined on the basis of user-defined criteria set by the operator of a discriminator. For example, in Fig. 21, the operator may designate the discriminator to default so that a given one of the denomination indicating elements is initially highlighted when no call bills are to be reconciled. For example, for each no call the operator may designate that the $10 element 2506d is to be initially selected. The operator may be permitted to set the default no call denomination, for example, in a set up mode entered into before bills in a stack are processed.

In addition to the ways discussed above whereby an initial denomination is prompted to the operator in connection with the reconciling a no call bill, according to other embodiments one or more alternate denominations are may also be suggested. For example, according to the method whereby the initial bill is suggested to the operator based on the denomination associated with a master pattern having the highest correlation relative to a scanned pattern, if the operator rejects the initial suggestion, the discriminator may be designed to then suggest an alternate denomination based on the master pattern associated with a genuine bill of a different denomination having the next highest correlation value. If the operator rejects the second suggestion, the discriminator may be designed to then suggest a second alternate denomination based on the master pattern associated with a genuine bill of a different denomination having the next highest correlation value, and so on.

For example, suppose the highest correlation was associated with a $1, the second highest correlation was associated with $10, and the third highest correlation was associated with $50. According to this embodiment, the discriminator would initially suggest that the no call was a $1. If the operator determined the no call was not a $1, the discriminator would then suggest that the no call was a $10. If the operator determined the no call was not a $10, the discriminator would then suggest that the no call was a $50. For example, according to the embodiment of FIGs. 23a-b, the discriminator would first ask whether the no call was a $1 by displaying the message "$1?" in the display area 2704. If the no call was a $1, the operator would depress the accept or yes key 2710. If the no call was not a $1 bill, the operator would depress the other denomination or no key 2711, in which case, the display area would display the message "$10?" and so on. Alternatively, the denomination selection elements may be arranged so that their relative order is based on the correlation results. For example, taking the menu list 2605 of Fig. 22, the denomination elements may be ordered in the order of decreasing correlation values, e.g., according to the previous example with the $1 denomination element being listed first, the $10 denomination element being listed second, the $50 denomination element being listed third and so on. Alternatively, the denomination elements may be listed in the reverse order. According to another embodiment, the denomination element associated with the highest correlation may be listed in the middle of the list surrounded by the denomination elements associated with the second and third highest correlations, and so on. For the above example, the $1 element 2606a would be listed in the middle of the menu list 2605 surrounded by the $10 element 2606d on one side and the $50 element 2606f on the other side.

Likewise the order in which denominations are suggested to the operator and/or arranged on the control panel may be based on other criteria such as those described above, such as the prior bill information (e.g., last bill, last no call, last call denomination), historical information, user-defined order, manufacturer-defined order, and random order. For example, using the historical data example given above based on 180 no calls (100 $5 no calls, 50 $10 no calls, and 30 $20 no calls), the order that denominations are suggested to the operator may be first $5, then $10, and then $20. Alternatively, using the last bill information and assuming the following sequence of bills ($2, $5, $5, $5, $20, $10, no call indicated to be a $50, no call); the discriminator would suggest denominations for the last no call in the following order: $50, $10, $20, $5, $2. Likewise the order in which the denominations are arranged on a control panel such as in FIGs. 22 and 20 may be determined based on such information, for example, according to the orders described above in connection with using correlation values. For example, the denominations may be listed in the prompting order suggested above (e.g., $5, $10, $20 in the historical information example and $50, $10, $20, $5, $2 in the last bill example). Alternatively they may be listed in the reverse order. Alternatively, they may be arranged with the first suggested denomination being in the center of the list and being initially highlighted or selected. This first suggested denomination may be surrounded by the second and third suggested denominations which are in turn surrounded by the fourth and fifth suggested denomination, and so on. A default sequence may be used to provide the order for any remaining denominations which are not dictated by a particular prompting criteria in a given situation. In the above examples, the denominations might be arranged on a menu list in the following orders: $2, $1, $10, $5, $20, $50, $100 for the historical information example and $1, $5, $10, $50, $20, $2, $100. In general, an example of a listing order according to this approach could be from top to bottom: 6th priority or suggested denomination, 4th, 2nd, 1st, 3rd, 5th, and 7th.

Embodiments arranging the respective order in which denominations are suggested to the operator and/or displayed on the control panel will likely aid the operator by reducing the projected number of times the operator will need to hit one of the scroll keys and/or "OTHER DENOM" or "NO" key.

Now several methods will be described in connection reconciliation of no calls in multi-output pocket machines after all bills in a stack have been processed. Recalling a previous example in which four no call bills were separated out from a stack of fifty bills and the machine halted after processing all fifty bills, the discriminator then prompts the operator to reconcile the value of the four no call bills. For example, assume the no call bills corresponded to the 5th, 20th, 30th, and 31st bills in the stack and were $2, $50, $10, and $2 bills respectively. The degree of intelligence employed by the discriminator in prompting the operator to reconcile the value of the no call bills may vary depending on the particular embodiment employed. According to one embodiment the operator may depress or select the denomination selection elements corresponding the denominations of the no call bills without any prompting from the discriminator as to their respective denominations. For example, using the control panel of Fig. 17, the operator would depress the $2 selection element 64g twice, the $10 selection element 64c once, and the $50 selection element 64e once. The discriminator may or may not inform the operator that four no call bills must be reconciled and may or may not limit the operator to entering four denominations. Likewise, in other embodiments, the operator may use the scroll keys to cause the desired denomination to become selected and then depress the accept key. Alternatively, a numerical keypad may be provided for permitting the operator to indicate the number of bills of each denomination that have not been called. For example, the above example, the operator could use the scroll keys so that the $2 denomination was selected, then press "2" on the keypad for the number of $2 no calls in the batch, and then press an enter or accept key. Then the operator could use the scroll keys so that the $10 denomination was selected, then press "1" on the keypad for the number of $10 no calls in the batch, and then press an enter or accept key and so on. The keypad may comprise, for example, keys or selection elements associated with the digits 0-9.

Alternatively, the discriminator may prompt the operator as to the denomination of each no call bill, for example, by employing one of the prompting methods discussed above, e.g., default, random, user-defined criteria, manufacturer defined criteria, prior bill information (last bill, last no call, last called denomination), historical information, scanned and master comparison information (e.g., highest correlation). For example, the discriminator may serially interrogate the examiner as to the denomination of each no call, for example, the display may initially query "Is 1st no call a $2?". Depending on the embodiment of the control panel being used, the operator could then select "ACCEPT" or "YES" or select the $2 denomination selection element, select "OTHER DENOM" or "NO" or use the scroll keys or select the appropriate denomination selection element, or if the operator finds the first bill unacceptable, the operator may put the first no call bill aside and select "CONT". The discriminator may then query the operator as to the denomination of the second no call bill, and so on. The denomination prompted to the operator would depend on the prompting criteria employed. For example, suppose the prompting criteria was the denomination of the preceding bill and further suppose that in the four no call example given above that the first bill was a $2, the 2nd bill was a $10, the 3rd bill was a $1, the 4th bill was a $1, the 19th bill was a $50, the 29th bill was a $10, and as stated above, the 30th bill was a $10. The discriminator would then prompt the operator as to whether the first no call was a $1. Since the first no call is a $2, the operator would choose "NO", "OTHER DENOM", scroll, or hit the $2 selection element depending on the embodiment be used. If the "NO" or "OTHER DENOM" key were pressed, the discriminator would review the preceding bills in reverse order and suggest the first denomination encountered that had not already been suggested, in this case a $10. If the "NO" or "OTHER DENOM" key were pressed again, the discriminator would then suggest a $2. A predetermined default sequence may be utilized when prior bill information does not contain the desired denomination. Once the operator indicates that the first no call is a $2, the discriminator would then prompt the operator as to whether the second no call was a $50. Since the second no call was indeed a $50 the operator would choose "ACCEPT", "YES", or select the $50 denomination selection element depending on the embodiment chosen. The discriminator would then suggest that the third no call was a $10 and the operator would similarly indicate acceptance of the $10 suggested denomination. Finally, the discriminator would suggest that the fourth no call was a $10. Since the last no call was a $2, the operator would reject the $10 suggestion and indicate that the fourth no call bill was a $2 as described above. The operation of the discriminator using a different prompting criteria would proceed in a similar manner and as described above with respect to each of the described prompting methods.

While discussed above with respect to no calls, the above embodiments could also be employed in connection with other types of flagged bills such as reverse-faced bills, reverse forward/reverse oriented bills, unfit bills, suspect bills, etc.

Referring now to Fig. 25, the touch screen I/O device 2956 includes a touch screen 2960 mounted over a graphics display 2961. In one embodiment, the display 2961 is a liquid crystal display (LCD) with backlighting. The display may have, for example, 128 vertical pixels and 256 horizontal pixels. The display 2961 contains a built-in character generator which permits the display 2961 to display text and numbers having font and size pre-defined by the manufacturer of the display. Moreover, a controller such as a CPU is programmed to permit the loading and display of custom fonts and shapes (e.g., key outlines) on the display 2961. The display 2961 is commercially available as Part No. GMF24012EBTW from Stanley Electric Company, Ltd., Equipment Export Section, of Tokyo, Japan.

The touch screen 2960 may be an X-Y matrix touch screen forming a matrix of touch responsive points. The touch screen 2960 includes two closely spaced but normally separated layers of optical grade polyester film each having a set of parallel transparent conductors. The sets of conductors in the two spaced polyester sheets are oriented at right angles to each other so when superimposed they form a grid. Along the outside edge of each polyester layer is a bus which interconnects the conductors supported on that layer. In this manner, electrical signals from the conductors are transmitted to the controller. When pressure from a finger or stylus is applied to the upper polyester layer, the set of conductors mounted to the upper layer is deflected downward into contact with the set of conductors mounted to the lower polyester layer. The contact between these sets of conductors acts as a mechanical closure of a switch element to complete an electrical circuit which is detected by the controller through the respective buses at the edges of the two polyester layers, thereby providing a means for detecting the X and Y coordinates of the switch closure. A matrix touch screen 2960 of the above type is commercially available from Dynapro Thin Film Products, Inc. of Milwaukee, Wisconsin.

As illustrated in Fig. 25, the touch screen 2960 forms a matrix of ninety-six optically transparent switch elements having six columns and sixteen rows. The controller is programmed to divide the switch elements in each column into groups of three to form five switches in each column. Actuation of any one of the three switch elements forming a switch actuates the switch. The uppermost switch element in each column remains on its own and is unused.

Although the touch screen 2960 uses an X-Y matrix of optically transparent switches to detect the location of a touch, alternative types of touch screens may be substituted for the touch screen 2960. These alternative touch screens use such well-known techniques as crossed beams of infrared light, acoustic surface waves, capacitance sensing, and resistive membranes to detect the location of a touch. The structure and operation of the alternative touch screens are described and illustrated, for example, in U.S. Patent Nos. 5,317,140, 5,297,030, 5,231,381, 5,198,976, 5,184,115, 5,105,186, 4,931,782, 4,928,094, 4,851,616, 4,811,004, 4,806,709, and 4,782,328, which are incorporated herein by reference.

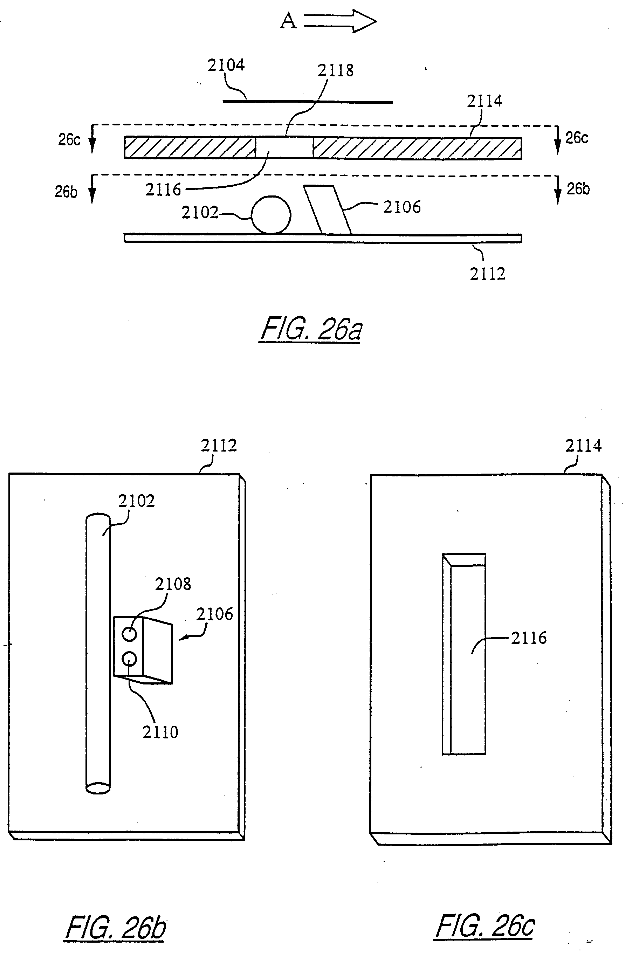

Referring now to FIGs. 26a-26c, there is shown a side view of one embodiment of a document authenticating system according to the present invention, a top view of the embodiment of FIG. 26a along the direction 26b, and a top view of the embodiment of FIG. 26a along the direction 26c, respectively. An ultraviolet ("UV") light source 2102 illuminates a document 2104. Depending upon the characteristics of the document, ultraviolet light may be reflected off the document and/or fluorescent light may be emitted from the document. A detection system 2106 is positioned so as to receive any light reflected or emitted toward it but not to receive any UV light directly from the light source 2102. The detection system 2106 comprises a UV sensor 2108, a fluorescence sensor 2110, filters, and a plastic housing. The light source 2102 and the detection system 2106 are both mounted to a printed circuit board 2112. The document 2104 is transported in the direction indicated by arrow A by a transport system (not shown). The document is transported over a transport plate 2114 which has a rectangular opening 2116 in it to permit passage of light to and from the document. In one embodiment of the present invention, the rectangular opening 2116 is 1.375 inches (3.493 cm) by 0.375 inches (0.953 cm). To minimize dust accumulation onto the light source 2102 and the detection system 2106 and to prevent document jams, the opening 2116 is covered with a transparent UV transmitting acrylic window 2118. To further reduce dust accumulation, the UV light source 2102 and the detection system 2106 are completely enclosed within a housing (not shown) comprising the transport plate 2114.

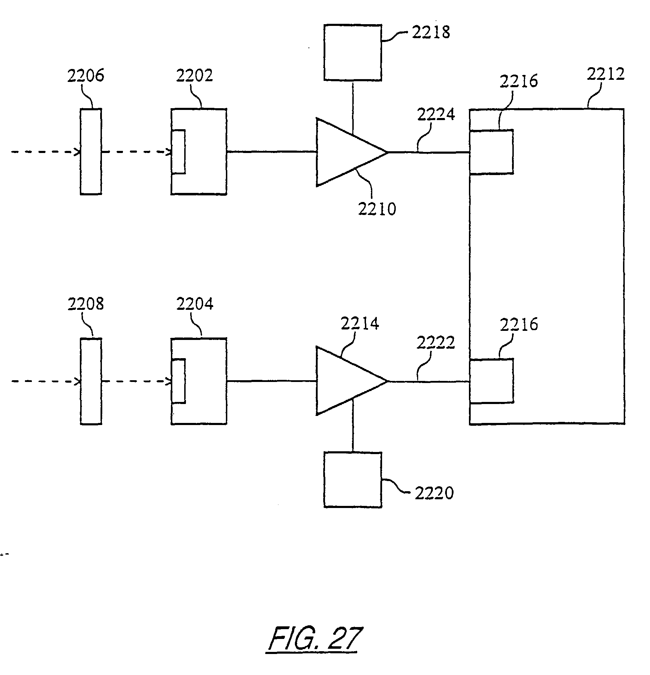

Referring now to Fig. 27, there is shown a functional block diagram illustrating one embodiment of a document authenticating system according to the present invention. Fig. 27 shows an UV sensor 2202, a fluorescence sensor 2204, and filters 2206, 2208 of a detection system such as the detection system 2106 of FIGs. 26a-c. Light from the document passes through the filters 2206, 2208 before striking the sensors 2202, 2204, respectively. An ultraviolet filter 2206 filters out visible light and permits UV light to be transmitted and hence to strike UV sensor 2202. Similarly, a visible light filter 2208 filters out UV light and permits visible light to be transmitted and hence to strike fluorescence sensor 2204. Accordingly, UV light, which has a wavelength below 400 nm, is prevented from striking the fluorescence sensor 2204 and visible light, which has a wavelength greater than 400 nm, is prevented from striking the UV sensor 2202. In one embodiment the UV filter 2206 transmits light having a wavelength between about 260 nm and about 380 nm and has a peak transmittance at 360 nm. In one embodiment, the visible light filter 2208 is a blue filter and preferably transmits light having a wavelength between about 415 nm and about 620 nm and has a peak transmittance at 450 nm. The above preferred blue filter comprises a combination of a blue component filter and a yellow component filter. The blue component filter transmits light having a wavelength between about 320 nm and about 620 nm and has a peak transmittance at 450 nm. The yellow component filter transmits light having a wavelength between about 415 nm and about 2800 nm. Examples of suitable filters are UG1 (UV filter), BG23 (blue bandpass filter), and GG420 (yellow longpass filter), all manufactured by Schott. In one embodiment the filters are about 8 mm in diameter and about 1.5 mm thick.

The UV sensor 2202 outputs an analog signal proportional to the amount of light incident thereon and this signal is amplified by amplifier 2210 and fed to a microcontroller 2212. Similarly, the fluorescence sensor 2204 outputs an analog signal proportional to the amount of light incident thereon and this signal is amplified by amplifier 2214 and fed to a microcontroller 2212. Analog-to-digital converters 2216 within the microcontroller 2212 convert the signals from the amplifiers 2210, 2214 to digital and these digital signals are processed by the software of the microcontroller 2212. The UV sensor 2202 may be, for example, an ultraviolet enhanced photodiode sensitive to light having a wavelength of about 360 nm and the fluorescence sensor 2204 may be a blue enhanced photodiode sensitive to light having a wavelength of about 450 nm. Such photodiodes are available from, for example, Advanced Photonix, Inc., Massachusetts. The microcontroller 2212 may be, for example, a Motorola 68HC16.

The exact characteristics of the sensors 2202, 2204 and the filters 2206, 2208 including the wavelength transmittance ranges of the above filters are not as critical to the present invention as the prevention of the fluorescence sensor from generating an output signal in response to ultraviolet light and the ultraviolet sensor from generating an output signal in response to visible light. For example, instead of, or in addition to, filters, a authentication system according to the present invention may employ an ultraviolet sensor which is not responsive to light having a wavelength longer than 400 nm and/or a fluorescence sensor which is not responsive to light having a wavelength shorter than 400 nm.

Calibration potentiometers 2218, 2220 permit the gains of amplifiers 2210, 2214 to be adjusted to appropriate levels. Calibration may be performed by positioning a piece of white fluorescent paper on the transport plate 2114 so that it completely covers the rectangular opening 2116 of FIGs. 26a-c. The potentiometers 2218, 2220 may then be adjusted so that the output of the amplifiers 2210, 2214 is 5 volts. Alternatively, calibration may be performed using genuine currency such as a piece of genuine U.S. currency. Potentiometers 2218 and 2220 may be replaced with electronic potentiometers located, for example, within the microcontroller 2212. Such electronic potentiometers may permit automatic calibration based on the processing of a single genuine document or a plurality of documents as will be described below.

The implementation of one embodiment of a document authenticating system according to the present invention as illustrated in Fig. 27 with respect to the authentication of U.S. currency will now be described. As discussed above, it has been determined that genuine United States currency reflects a high level of ultraviolet light and does not fluoresce under ultraviolet illumination. It has also been determined that under ultraviolet illumination counterfeit United States currency exhibits one of the four sets of characteristics listed below:
1) Reflects a low level of ultraviolet light and fluoresces;
2) Reflects a low level of ultraviolet light and does not fluoresce;
3) Reflects a high level of ultraviolet light and fluoresces;
4) Reflects a high level of ultraviolet light and does not fluoresce.
Counterfeit bills in categories (1) and (2) may be detected by a currency authenticator employing an ultraviolet light reflection test according to one embodiment of the present invention. Counterfeit bills in category (3) may be detected by a currency authenticator employing both an ultraviolet reflection test and a fluorescence test according to another embodiment of the present invention. Only counterfeits in category (4) are not detected by the authenticating methods of the present invention.

According to one embodiment of the present invention, fluorescence is determined by any signal that is above the noise floor. Thus, the amplified fluorescent sensor signal 2222 will be approximately 0 volts for genuine U.S. currency and will vary between approximately 0 and 5 volts for counterfeit bills depending upon their fluorescent characteristics. Accordingly, an authenticating system according to one embodiment of the present invention will reject bills when signal 2222 exceeds approximately 0 volts.

According to one embodiment of the present invention, a high level of reflected UV light ("high UV") is indicated when the amplified UV sensor signal 2224 is above a predetermined threshold. The high/low UV threshold is a function of lamp intensity and reflectance. Lamp intensity can degrade by as much as 50% over the life of the lamp and can be further attenuated by dust accumulation on the lamp and the sensors. The problem of dust accumulation is mitigated by enclosing the lamp and sensors in a housing as discussed above. An authenticating system according to one embodiment of the present invention tracks the intensity of the UV light source and readjusts the high/low threshold accordingly. The degradation of the UV light source may be compensated for by periodically feeding a genuine bill into the system, sampling the output of the UV sensor, and adjusting the threshold accordingly. Alternatively, degradation may be compensated for by periodically sampling the output of the UV sensor when no bill is present in the rectangular opening 2116 of the transport plate 2114. It is noted that a certain amount of UV light is always reflected off the acrylic window 2118. By periodically sampling the output of the UV sensor when no bill is present, the system can compensate for light source degradation. Furthermore, such sampling could also be used to indicate to the operator of the system when the ultraviolet light source has burned out or otherwise requires replacement. This may be accomplished, for example, by means of a display reading or an illuminated light emitting diode ("LED"). The amplified ultraviolet sensor signal 2224 will initially vary between 1.0 and 5.0 volts depending upon the UV reflectance characteristics of the document being scanned and will slowly drift downward as the light source degrades. In an alternative embodiment to one embodiment wherein the threshold level is adjusted as the light source degrades, the sampling of the UV sensor output may be used to adjust the gain of the amplifier 2210 thereby maintaining the output of the amplifier 2210 at its initial levels.

It has been found that the voltage ratio between counterfeit and genuine U.S. bills varies from a discernable 2-to-1 ratio to a non-discernable ratio. According to one embodiment of the present invention a 2-to-1 ratio is used to discriminate between genuine and counterfeit bills. For example, if a genuine U.S. bill generates an amplified UV output sensor signal 2224 of 4.0 volts, documents generating an amplified UV output sensor signal 2224 of 2.0 volts or less will be rejected as counterfeit. As described above, this threshold of 2.0 volts may either be lowered as the light source degrades or the gain of the amplifier 2210 may be adjusted so that 2.0 volts remains an appropriate threshold value.

According to one embodiment of the present invention, the determination of whether the level of UV reflected off a document is high or low is made by sampling the output of the UV sensor at a number of intervals, averaging the readings, and comparing the average level with the predetermined high/low threshold. Alternatively, a comparison may be made by measuring the amount of UV light reflected at a number of locations on the bill and comparing these measurements with those obtained from genuine bills. Alternatively, the output of one or more UV sensors may be processed to generate one or more patterns of reflected UV light and these patterns may be compared to the patterns generated by genuine bills. Such a pattern generation and comparison technique may be performed by modifying an optical pattern technique such as that disclosed in United States Pat. No. 5,295,196 incorporated herein by reference in its entirety or in United States patent application Serial No. 08/287,882 filed August 9, 1994 for a "Method and Apparatus for Document Identification," incorporated herein by reference in its entirety.

In a similar manner, the presence of fluorescence may be performed by sampling the output of the fluorescence sensor at a number of intervals. However, in one embodiment, a bill is rejected as counterfeit U.S. currency if any of the sampled outputs rise above the noise floor. However, the alternative methods discussed above with respect to processing the signal or signals of a UV sensor or sensors may also be employed, especially with respect to currencies of other countries or other types of documents which may employ as security features certain locations or patterns of fluorescent materials.

A currency authenticating system according to the present invention may be provided with means, such as a display, to indicate to the operator the reasons why a document has been rejected, e.g., messages such as "UV FAILURE" or "FLUORESCENCE FAILURE." A currency authenticating system according to the present invention may also permit the operator to selectively choose to activate or deactivate either the UV reflection test or the fluorescence test or both. A currency authenticating system according to the present invention may also be provided with means for adjusting the sensitivities of the UV reflection and/or fluorescence test, for example, by adjusting the respective thresholds. For example, in the case of U.S. currency, a system according to the present invention may permit, the high/low threshold to be adjusted, for example, either in absolute voltage terms or in genuine/suspect ratio terms.

The UV and fluorescence authentication test may be incorporated into various document handlers such as currency counters and/or currency denomination discriminators such as that disclosed in connection with FIGs. 1 and 14-16b and U.S. Patent No. 5,295,196 incorporated herein by reference in its enitirety. In such systems, calibration may be performed by processing a stack of genuine documents. An example of a method of calibrating such a device will now be discussed.

As mentioned above, the acrylic window 818 reflects a certain amount of UV light even when no bill is present. The amount of UV light reflected in the absence of bills is measured. A stack of genuine bills may then be processed with the potentiometer 2218 set to some arbitrary value and the resulting UV readings averaged. The difference between the average reading and the reading made in the absence of bills may then be calculated. The potentiometer 2218 may then be adjusted so that the average reading would be at least 0.7 volts greater then the no bill reading. It is also desirable to adjust the potentiometer 2218 so that the amplifier 2210 operates around the middle of its operating range. For example, if a reading of 1.0 volt results when no bills are present and an average reading of 3.0 volts results when a stack of genuine bills are processed, the resulting difference is 2.0 volts which is greater than 0.7 volts. However, it is desirable for the amplifier to be operating in the range of about 2.0 to 2.5 volts and preferably at about 2.0 volts. `Thus in the above example, the potentiometer 2218 may be used to adjust the gain of the amplifier 2210 so that an average reading of 2.0 volts would result. Where potentiometer 2218 is an electronic potentiometer, the gain of the amplifier 2210 may be automatically adjusted by the microcontroller 2212. In general, when the average reading is too high the potentiometer is adjusted to lower the resulting values to the center of the operating range of the amplifier and vice versa when the average reading is too low.

According to another embodiment of the present invention, the operator of a document handling device such as a currency counter or a currency denomination discriminator is provided with the ability to adjust the sensitivity of a UV reflection test, a fluorescence test, and a magnetic test. For example, a note counter embodying an embodiment of the present invention may provide the operator the ability to set the authentication tests to a high or a low sensitivity. For example, the note counter may be provided with a set up mode which enables the operator to adjust the sensitivities for each of the above tests for both the high and the low modes. This may be achieved through appropriate messages being displayed on, for example, display 36 of FIG. 2 and the input of selection choices via an input device such as a keyboard or buttons. In one embodiment, the device permits the operator to adjust the UV test, the fluorescent test, and the magnetic test in a range of sensitivities 1 - 7, with 7 being the most sensitive, or to turn each test off. The device permits setting the sensitivity as described above for the three authentication tests for both a low sensitivity (low denomination) mode and a high sensitivity (high denomination) mode. The above setting options are summarized in Table 1.

**Table 1**

| Mode | UV Test Sensitivity | Fluorescent Test Sensitivity | Magnetic Test Sensitivity |
|---|---|---|---|
| High | off, 1-7 | off, 1-7 | off, 1-7 |
| Low | off, 1-7 | off, 1-7 | off, 1-7 |

According to an alternate embodiment, the above high/low modes are replaced with denomination modes, for example, one for each of several denominations of currency (e.g., $1, $2, $5, $10, $20, $50 and $100). For each denomination, the sensitivity of the three tests may be adjusted between 1-7 or off. According to one embodiment for operator manually selects either the high or low mode or the appropriate denomination mode based on the values of the notes to be processed. This manual mode selection system may be employed in, for example, either a note counter or a currency denomination discriminator. According to another embodiment the document handling system automatically selects either the high or low mode or the appropriate denomination mode based on the values of the notes being processed. This automatic mode selection system may be employed in systems capable of identifying the different values or kinds of documents, for example, a currency denomination discriminator.

Accordingly, in the low mode or for low denomination modes (e.g., $1, $2) the three tests may be set to relatively low sensitivities (e.g., UV test set at 2, fluorescent test set at 5, and magnetic test set at 3). Conversely, in the high mode or for high denomination modes (e.g., $50, $100) the three tests may be set to relatively high sensitivities (e.g., UV test set at 5, fluorescent test set at 6, and magnetic test set at 7). In this way, authentication sensitivity may be increased when processing high value notes where the potential harm or risk in not detecting a counterfeit may be greater and may be decreased when processing low value notes where the potential harm or risk in not detecting a counterfeit is lesser and the annoyance of wrongly rejecting genuine notes is greater. Also the UV, fluorescent, and/or magnetic characteristics of genuine notes can vary due to number of factors such wear and tear or whether the note has been washed (e.g., detergents). As a result, the fluorescent detection of genuine U.S. currency, for example, may yield readings of about 0.05 or 0.06 volts.

The UV and fluorescent thresholds associated with each of the seven sensitivity levels may be set, for example, as shown in Table 2.

**Table 2**

| Sensitivity Level | UV Test (Volts) | Fluorescent Test (Volts) |
|---|---|---|
| 1 | 0.2 | 0.7 |
| 2 | 0.3 | 0.6 |
| 3 | 0.4 | 0.5 |
| 4 | 0.5 | 0.3 |
| 5 | 0.55 | 0.2 |
| 6 | 0.6 | 0.15 |
| 7 | 0.7 | 0.1 |

In performing the UV test according to one embodiment, the no bill reflectance value is subtracted from resulting UV reflectance voltages associated with the scanning of a particular bill, and this difference is compared against the appropriate threshold value such as those in Table 2 in determining whether to reject a bill.

According to one embodiment, the potentiometer 2220 associated with the fluorescence detector 2204 is calibrated by processing a genuine note or stack of notes, as described above in connection with the calibration of the UV detector, and adjusted so that a reading of near 0 volts (e.g., about 0.1 volt) results. Magnetic calibration may be performed, for example, manually in conjunction with the processing of a genuine bill of known magnetic characteristics and adjusting the magnetic sensor to near the center of its range.

Upon a bill failing one or more of the above tests, an appropriate error message may be displayed such as "Suspect Document U--" for failure of the UV reflection test, "Suspect Document -F-" for failure of the fluorescent test, "Suspect Document --M" for failure of the magnetic test, or some combination thereof when more than one test is failed (e.g., "Suspect Document UF-" for failure of both the UV reflection test and the fluorescent test).

While the present invention has been described with reference to one or more particular embodiments, those skilled in the art will recognize that many changes may be made thereto without departing from the spirit and scope of the present invention. Each of these embodiments and obvious variations thereof is contemplated as falling within the spirit and scope of the claimed invention, which is set forth in the following claims.

## Claims

1. A device for authenticating documents comprising:
an ultraviolet light source for illuminating a document to be tested;
an ultraviolet light detector for generating an output signal responsive to ultraviolet light reflected by said document;
means for selecting one of a plurality of sensitivity settings, each of said sensitivity settings having a reference signal associated therewith; and
a signal processor for receiving said ultraviolet light detector output signal and determining the authenticity of said document based upon said output signal; said signal processor determining the authenticity of said document by comparing said output signal to the reference signal associated with said one of said plurality of sensitivity settings selected by said means for selecting.

2. A currency authenticating device having a plurality of sensitivity settings comprising:
one or more detectors for retrieving a plurality of types of characteristic information from a bill to be authenticated and generating a respective output signal associated with each type of characteristic information;
means for selecting, for each type of characteristic information, one of a plurality of sensitivity settings;
means for storing, for each type of characteristic information, reference information associated with each of said sensitivity settings;
means for comparing, for each type of characteristic information, said respective output signal to corresponding reference information associated with the one of said plurality of sensitivity settings selected by said means for selecting for said type of characteristic information; said means for comparing indicating that said bill is counterfeit if one or more of said output signals do not satisfactorily compare with said reference information.

3. The device of claim 2 wherein said plurality of types of characteristic information comprise magnetic information, reflected ultraviolet light information, and fluorescent light information.

4. A currency authenticating device having a plurality of sensitivity settings comprising:
a first characteristic detector retrieving first characteristic information from a bill to be authenticated and generating an output signal;
means for selecting one of a plurality of sensitivity settings;
means for storing reference information associated with each of said sensitivity settings; and
means for comparing said output signal to said reference information associated with the one of said plurality of sensitivity settings selected by said means for selecting; said means for comparing indicating that said bill is counterfeit if said output signal does not satisfactorily compare with said reference information;
wherein said means for storing reference information stores reference information for a plurality of denominations of bills and wherein said means for storing stores reference information associated with each of said sensitivity settings for each of said plurality of denominations.

5. The device according to any of claims 1-4 further comprising means for assigning a sensitivity setting to each of a plurality of denominations.

6. The device of claim 5 wherein said means for assigning a sensitivity setting to each of said plurality of denominations permits an operator of the authenticator to assign a sensitivity setting to each of said plurality of denominations.

7. The device according to any of claims 1-6 further comprising means for the operator of the authenticator to indicate the denomination of the bill to be authenticated and wherein said means for selecting selects said one of said plurality of sensitivity settings to be the sensitivity setting assigned to the indicated denomination.

8. The device according to any of claims 1-6 further comprising means for determining the denomination of said bill to be authenticated and wherein said means for selecting selects said one of said plurality of sensitivity settings to be the sensitivity setting assigned to the determined denomination of said bill.

9. The device according to any of claims 1-6 further comprising means for determining the denomination of said bill to be authenticated and wherein said means for selecting one of said plurality of sensitivity settings selects a lower sensitivity setting when said bill is determined to be of a lower denomination and a higher sensitivity setting when said bill is determined to be of a higher denomination.

10. The device according to any of claims 1-9 wherein each of a plurality of denominations has a sensitivity setting is assigned thereto.

11. The device according to any of claims 1-10 wherein said plurality of sensitivity settings comprise a high sensitivity setting and a low sensitivity setting.

12. The device according to any of claims 1-11 wherein said reference information associated with each of said sensitivity settings comprise a threshold value associated with each of said sensitivity settings and wherein said means for comparing indicates that said bill is counterfeit if said output signal fails to satisfy a predetermined relationship relative to said threshold value associated with the one of said plurality of sensitivity settings selected by said means for selecting.

13. The device of claim 12 wherein said plurality of sensitivity settings comprise a high sensitivity setting and a low sensitivity setting and wherein said means for storing stores a high reference value and a low reference value, said high reference value being closer to a value of an output signal expected to be generated from a genuine bill than said low reference value.
